# EUROPEAN PATENT SPECIFICATION

(11) **EP 2 224 109 B1**
(45) Date of publication and mention of the grant of the patent: **16.01.2019**
(21) Application number: 10154954.1
(22) Date of filing: 26.02.2010
(51) Int. Cl.: F01N 11/00, F02D 41/02, F02D 41/14, F02D 41/22, F02D 41/40

(54) **Controller for internal combustion engine**
Regler für Verbrennungsmotor
Contrôleur pour moteur à combustion interne

(30) Priority: 26.02.2009 JP 2009044545; 26.02.2009 JP 2009044546
(43) Date of publication of application: 01.09.2010
(73) Proprietor: TOYOTA JIDOSHA KABUSHIKI KAISHA, Toyota-shi, Aichi-ken, 471-8571 (JP)
(72) Inventor: Morikawa, Atsushi, Toyota-shi, Aichi-ken 471-8571 (JP); Hoda, Ikuo, Toyota-shi, Aichi-ken 471-8571 (JP)
(74) Representative: Intès, Didier Gérard André

(56) References cited:
- DE-A1-102007 037 569
- DE-A1-102009 014 459
- FR-A1- 2 937 084
- JP-A- 2008 038 742
- US-A1- 2003 051 468
- US-A1- 2008 034 742

## Description

### BACKGROUND OF THE INVENTION

### 1. Field of the Invention

The invention relates to a controller for an internal combustion engine that includes a catalyst provided in an exhaust passage and a fuel addition valve that is provided upstream of the catalyst in the exhaust passage and that supplies fuel to the catalyst.

### 2. Description of the Related Art

An existing controller for an internal combustion engine of this type is, for example, described in Japanese Patent Application Publication No. 2005-256722 (JP-A-2005-256722) and Japanese Patent Application Publication No. 2009-13842 (JP-A-2009-13842). In an exhaust passage of an existing general internal combustion engine, including the internal combustion engine described in JP-A-2005-256722 or the internal combustion engine described in JP-A-2009-13842, a catalyst is provided, and a fuel addition valve is provided upstream of the catalyst to supply fuel to the catalyst. In addition, a filter is provided downstream of the catalyst in the exhaust passage, and traps particulate matter contained in exhaust gas. Then, the fuel addition valve is used to add fuel to exhaust gas flowing into the catalyst to thereby cause oxidation reaction with the catalyst. Thus, the temperature of exhaust gas flowing into the filter is increased to burn and remove particulate matter.

Incidentally, in the thus configured internal combustion engine, when the catalyst is abnormal, oxidation reaction with the catalyst does not desirably progress even when fuel is supplied to the catalyst. Thus, there occurs a problem that the temperature of exhaust gas flowing into the filter cannot be desirably increased and, as a result, it is difficult to burn and remove particulate matter trapped in the filter.

Then, when a fuel supply command signal is output to the fuel addition valve and then the degree of increase in temperature of the catalyst in response to the output command signal is lower than or equal to a predetermined value, the catalyst is conceivably diagnosed to be abnormal on the basis of this fact. However, in the thus configured diagnostic mode, even when the fuel addition valve is abnormal, the degree of increase in temperature of the catalyst may be lower than or equal to the predetermined value. Thus, despite the fact that the catalyst is normal, the catalyst may be erroneously diagnosed to be abnormal.

On the other hand, when the fuel addition valve has an abnormality, such as degradation, it is difficult to supply fuel to the catalyst and, as a result, oxidation reaction with the catalyst does not progress desirably. Thus, there occurs a problem that the temperature of exhaust gas flowing into the filter cannot be desirably increased and, as a result, it is difficult to burn and remove particulate matter trapped in the filter.

Then, when a fuel supply command signal is output to the fuel addition valve and then the degree of increase in temperature of the catalyst in response to the output command signal is lower than or equal to a predetermined value, the fuel addition valve is conceivably diagnosed to be abnormal on the basis of this fact. However, in the thus configured diagnostic mode, even when the catalyst is abnormal, the degree of increase in temperature of the catalyst may be lower than or equal to the predetermined value. Thus, despite the fact that the fuel addition valve is normal, the fuel addition valve may be erroneously diagnosed to be abnormal.

In addition, there is a controller that executes abnormality diagnosis control. In the abnormality diagnosis control, the controller outputs an additive supply command to an addition valve, detects the degree of change in exhaust gas temperature in response to the output additive supply command using an exhaust gas temperature sensor, and then diagnoses whether the addition valve is abnormal on the basis of the degree of change in exhaust gas temperature. This focuses on the fact that, when a predetermined rate of additive is not supplied at the time when a command for supplying the predetermined rate of additive is output, the degree of increase in exhaust gas temperature downstream of the catalyst is lower than that during normal times.

On the other hand, there is an internal combustion engine, such as a V-type internal combustion engine, that includes two cylinder banks and that is configured so that exhaust passages of these cylinder banks are collected downstream of the exhaust passages. There is suggested one of the thus configured internal combustion engines, in which an addition valve and a catalyst are provided in the exhaust passage of each cylinder bank, and a common filter is provided downstream of a collecting portion at which the exhaust passages of the respective cylinder banks are collected.

In addition, for example, there is suggested an internal combustion engine in which two addition valves are provided upstream of a catalyst in an exhaust passage, and a common filter is provided downstream of these plurality of addition valves. Note that in these internal combustion engines as well, an exhaust gas temperature sensor is provided downstream of the filter.

Incidentally, when the above abnormality diagnosis control is applied to a controller for an internal combustion engine equipped with the exhaust gas temperature sensor common to the plurality of addition valves provided upstream of the exhaust gas temperature sensor, the following problems occur. That is, when it is diagnosed whether the addition valves are abnormal on the basis of the degree of change in exhaust gas temperature, it is impossible to recognize which one of the plurality of addition valves is abnormal, so it is difficult to accurately perform abnormality diagnosis. In addition, in a controller that executes supply rate learning control for setting the supply rate learned values of the addition valves on the basis of the degree of change in exhaust gas temperature, it is impossible to recognize the deviation of additive supply rate of each addition valve with respect to an additive supply command, so it is difficult to accurately set the supply rate learned values.

Note that the above problems are not exclusive to the controller for an internal combustion engine equipped with exhaust gas temperature detecting means common to a plurality of addition valves provided upstream of the exhaust gas temperature detecting means, which controller outputs an additive supply command to the addition valves and executes abnormality diagnosis control or supply rate learning control on the addition valves on the basis of the degree of change in exhaust gas temperature in response to the output additive supply command. For example, the above problems can also mostly occur in a controller for an internal combustion engine equipped with air-fuel ratio detecting means common to a plurality of addition valves provided upstream of the air-fuel ratio detecting means, which controller outputs an additive supply command to the addition valves and executes abnormality diagnosis control or supply rate learning control on the addition valves on the basis of the degree of change in air-fuel ratio in response to the output additive supply command. JP2008038742 discloses a controller for an internal combustion engine according to the preamble of claim 1.

### SUMMARY OF THE INVENTION

The invention provides a controller for an internal combustion engine that is able to prevent a catalyst or a fuel addition valve, equipped for the internal combustion engine, from being erroneously diagnosed to be abnormal.

The invention is defined by claim 1 and provides a controller for an internal combustion engine that includes a catalyst that is provided in an exhaust passage, a fuel addition valve that is provided upstream of the catalyst in the exhaust passage and configured to supply fuel to the catalyst, a fuel injection valve configured to inject fuel into a cylinder, temperature increase detecting means configured to detect an increase in temperature of the catalyst, and air-fuel ratio detecting means that is provided downstream of the catalyst in the exhaust passage and that is configured to detect the air-fuel ratio of exhaust gas. The controller is configured so that the fuel injection valve injects fuel into a cylinder at a timing at which the fuel does not contribute to combustion of the internal combustion engine to thereby supply unburned fuel to the catalyst; the temperature increase detecting means detects an increase in temperature of the catalyst in response to fuel supplied by the fuel addition valve or the fuel injection valve; and the controller comprising diagnostic means that is configured to diagnose whether the catalyst and/or the fuel addition valve are abnormal on the basis of whether the degree of increase in temperature of the catalyst in response to a fuel supply command for supplying fuel, which is output to the fuel addition valve by the diagnostic means, reflects the supplied fuel and whether the degree of increase in temperature of the catalyst in response to a fuel supply command for supplying fuel, which is output to the fuel injection valve by the diagnostic means, reflects the supplied fuel at the time of the diagnosis.

Here, the diagnostic means is configured to diagnose that the catalyst is normal and the fuel addition valve is abnormal when the degree of increase in temperature of the catalyst in response to a fuel supply command for supplying fuel, which is output to the fuel addition valve by the diagnostic means, does not reflect the supplied fuel and when the degree of increase in temperature of the catalyst in response to a fuel supply command for supplying fuel, which is output to the fuel injection valve by the diagnostic means, reflects the supplied fuel at the time of the diagnosis.

At least one of the fuel addition valve and the catalyst is presumably abnormal when the degree of increase in temperature of the catalyst in response to a fuel supply command for supplying fuel, which is output to the fuel addition valve, does not reflect the supplied fuel. In addition, at least the catalyst is presumably normal when the degree of increase in temperature of the catalyst in response to a fuel supply command for supplying fuel, which is output to the fuel injection valve, reflects the supplied fuel. In this way, with the above configuration, it is possible to diagnose whether the catalyst and/or the fuel addition valve are abnormal. Here, when a fuel supply command for supplying fuel is output to the fuel addition valve and then the degree of increase in temperature of the catalyst in response to the output fuel supply command does not reflect the supplied fuel, and when a fuel supply command for supplying fuel is output to the fuel injection valve and the degree of increase in temperature of the catalyst in response to the output fuel supply command reflects the supplied fuel, it is possible to accurately diagnose that the catalyst is normal and the fuel addition valve is abnormal. Thus, it is possible to prevent erroneous diagnosis as to whether the catalyst and/or the fuel addition valve are abnormal.

In addition, the diagnostic means is configured to diagnose that the catalyst is abnormal and the fuel addition valve is normal when the degree of increase in temperature of the catalyst in response to a fuel supply command for supplying fuel, which is output to the fuel addition valve by the diagnostic means, does not reflect the supplied fuel and when the degree of change in air-fuel ratio of the exhaust gas in response to the output fuel supply command, reflects the supplied fuel at the time of the diagnosis.

When a fuel supply command for supplying fuel is output to the fuel addition valve and then the degree of change in air-fuel ratio of exhaust gas in response to the output fuel supply command reflects the supplied fuel, at least the fuel addition valve is presumably normal. In addition, when the degree of increase in temperature of the catalyst in response to the output fuel supply command does not reflect the supplied fuel, at least one of the fuel addition valve and the catalyst is presumably abnormal. Thus, when the diagnostic means is configured to diagnose whether the catalyst and/or the fuel addition valve are abnormal as in the case of the above configuration, it is possible to accurately diagnose a situation that the catalyst is abnormal and the fuel addition valve is normal. Thus, it is possible to prevent erroneous diagnosis as to whether the catalyst and/or the fuel addition valve are abnormal.

In addition, the catalyst and the fuel addition valve are abnormal when the degree of change in air-fuel ratio of the exhaust gas in response to a fuel supply command for supplying fuel, which is output to the fuel addition valve by the diagnostic means, does not reflect the supplied fuel and when the degree of increase in temperature of the catalyst in response to a fuel supply command for supplying fuel, which is output to the fuel injection valve by the diagnostic means, does not reflect the supplied fuel at the time of the diagnosis.

When a fuel supply command for supplying fuel is output to the fuel addition valve and then the degree of change in air-fuel ratio of exhaust gas in response to the output fuel supply command does not reflect the supplied fuel, at least the fuel addition valve is presumably abnormal. In addition, when a fuel supply command for supplying fuel is output to the fuel injection valve and then the degree of increase in temperature of the catalyst in response to the output fuel supply command does not reflect the supplied fuel, at least the catalyst is presumably abnormal. Thus, when the diagnostic means is configured to diagnose whether the catalyst and/or the fuel addition valve are abnormal as in the case of the above configuration, it is possible to accurately diagnose a situation that both the catalyst and the fuel addition valve are abnormal. Thus, it is possible to prevent erroneous diagnosis as to whether the catalyst and/or the fuel addition valve are abnormal.

In addition, the diagnostic means may be configured to diagnose that both the catalyst and the fuel addition valve are normal when the degree of increase in temperature of the catalyst in response to a fuel supply command for supplying fuel, which is output to the fuel addition valve by the diagnostic means, reflects the supplied fuel at the time of the diagnosis.

In addition, when the degree of change in air-fuel ratio of the exhaust gas in response to a fuel supply command for supplying fuel, which is output to the fuel addition valve by the diagnostic means, does not reflect the supplied fuel at the time of the diagnosis, the diagnostic means may be configured to diagnose whether the catalyst and/or the fuel addition valve are abnormal on the basis of the degree of increase in temperature of the catalyst in response to a fuel supply command for supplying fuel, which is output to the fuel injection valve by the diagnostic means, while stopping outputting a fuel supply command for supplying fuel to the fuel addition valve.

In the controller for an internal combustion engine, the diagnostic means may be configured to, when the degree of change in air-fuel ratio of the exhaust gas in response to the fuel supply command output to the fuel addition valve reflects the supplied fuel, prohibit outputting the fuel supply command to the fuel injection valve in order to diagnose whether the catalyst and/or the fuel addition valve are abnormal.

When a fuel supply command for supplying fuel is output to the fuel addition valve and then the degree of change in air-fuel ratio of exhaust gas in response to the output fuel supply command reflects the supplied fuel, at least the fuel addition valve is presumably normal. In addition, when the degree of increase in temperature of the catalyst in response to the output fuel supply command reflects the supplied fuel, the catalyst is presumably normal; whereas when the degree of increase in temperature of the catalyst does not reflect the supplied fuel, the catalyst is presumably abnormal. That is, when a fuel supply command for supplying fuel is output to the fuel addition valve and then the degree of change in air-fuel ratio of exhaust gas in response to the output fuel supply command reflects the supplied fuel, it is possible to accurately diagnose whether the catalyst and/or the fuel addition valve are abnormal, so it is not necessary to output a fuel supply command for supplying fuel to the fuel injection valve thereafter.

In terms of this point, with the above configuration, outputting a fuel supply command for supplying fuel to the fuel injection valve is prohibited when a fuel supply command for supplying fuel is output to the fuel addition valve and then the degree of change in air-fuel ratio of exhaust gas in response to the output fuel supply command reflects the supplied fuel. Thus, it is possible to suppress deterioration in fuel consumption due to unburned fuel supplied by the fuel injection valve.

In the controller for an internal combustion engine, a plurality of the fuel addition valves may be provided upstream of the air-fuel ratio detecting means, the diagnostic means may be configured to perform the diagnosis on the fuel addition valves one by one, and, when the diagnostic means performs diagnosis on a predetermined one of the fuel addition valves, the diagnostic means may be configured to prohibit supplying fuel by the fuel addition valve(s) other than the predetermined one of the fuel addition valves.

In the configuration that the plurality of fuel addition valves are provided upstream of the air-fuel ratio detecting means, when a fuel supply command for supplying fuel is output to the plurality of fuel addition valves at the same time at the time of diagnosis as to whether the catalyst and/or the fuel addition valve are abnormal, it is difficult to prevent erroneous diagnosis as to whether the catalyst and/or the fuel addition valve are abnormal because of the following reason. That is, for example, when the plurality of fuel addition valves mixedly include a normal fuel addition valve and an abnormal fuel addition valve, fuel is supplied by the normal fuel addition valve. Therefore, when the degree of change in air-fuel ratio of exhaust gas in response to a fuel supply command for supplying fuel, which is output to the fuel addition valve, reflects the supplied fuel, it is difficult to recognize that the abnormal fuel addition valve is present. In addition, when the degree of change in air-fuel ratio of exhaust gas does not reflect the supplied fuel, it is possible to recognize that the abnormal fuel addition valve is present; however, it is impossible to identify the abnormal fuel addition valve.

In terms of this point, with the above configuration, when the diagnostic means performs the diagnosis on the fuel addition valves one by one, and, when the diagnostic means performs diagnosis on a predetermined one of the fuel addition valves, the diagnostic means prohibits supplying fuel by the other fuel addition valve(s). Here, when a fuel supply command for supplying fuel is output to the predetermined one of the fuel addition valves and then the degree of change in air-fuel ratio of exhaust gas in response to the output fuel supply command reflects the supplied fuel, at least the predetermined one of the fuel addition valves is presumably normal. Thus, when the abnormal fuel addition valve is present, the abnormal fuel addition valve may be identified.

In the controller for an internal combustion engine, the internal combustion engine may include a plurality of cylinder banks, the exhaust passage may be provided for each of the cylinder banks, the exhaust passages may be collected at a collecting portion downstream of the exhaust passages, the catalyst and the fuel addition valve both may be provided for each of the cylinder banks, and the air-fuel ratio detecting means may be provided downstream of the collecting portion.

For example, there is an internal combustion engine, such as a V-type engine, that includes a plurality of cylinder banks. In the internal combustion engine, an exhaust passage is provided for each of the cylinder banks, the exhaust passages are collected at a collecting portion downstream of the exhaust passages, and the catalyst and the fuel addition valve both are provided for each of the cylinder banks, and air-fuel ratio detecting means is provided downstream of the collecting portion. In the thus configured internal combustion engine, when a fuel supply command for supplying fuel is output to the fuel addition valves of the respective cylinder banks at the same time at the time of diagnosis as to whether the catalysts and/or the fuel addition valves are abnormal, it is difficult to prevent erroneous diagnosis as to whether the catalysts and/or the fuel addition valves are abnormal because of the following reason. That is, for example, when the normal fuel addition valve and the abnormal fuel addition valve are mixedly present in the fuel addition valves of the cylinder banks, as a fuel supply command for supplying fuel is output to the fuel addition valves at the same time, fuel is supplied by the normal fuel addition valve, and the degree of change in air-fuel ratio of exhaust gas may reflect the supplied fuel. Therefore, when the degree of change in air-fuel ratio of exhaust gas in response to a fuel supply command, which is output to the fuel addition valve, reflects the supplied fuel, it is difficult to recognize that the abnormal fuel addition valve is present. In addition, when the degree of change in air-fuel ratio of exhaust gas does not reflect the supplied fuel, it is possible to recognize that the abnormal fuel addition valve is present; however, it is impossible to identify the abnormal fuel addition valve.

In terms of this point, with the above configuration, the diagnostic means performs diagnosis on the cylinder banks one by one, and, when the diagnostic means performs diagnosis on the fuel addition valve of a predetermined one of the cylinder banks, the diagnostic means prohibits supplying fuel by the fuel addition valve(s) of the other cylinder bank'(s). Here, when a fuel supply command for supplying fuel is output to the fuel addition valve of a predetermined one of the fuel addition valves and then the degree of change in air-fuel ratio of exhaust gas in response to the output fuel supply command reflects the supplied fuel, at least the fuel addition valve of the predetermined one of the cylinder banks is presumably normal. Thus, when the abnormal fuel addition valve is present, the abnormal fuel addition valve may be identified.

In addition, a filter may be provided downstream of the collecting portion in the exhaust passages, and may trap particulate matter contained in exhaust gas.

In the controller for an internal combustion engine, the diagnostic means may be configured to perform the diagnosis only immediately after start-up of the internal combustion engine.

In the configuration that the diagnostic means prohibits supplying fuel by the fuel addition valve(s) of the cylinder bank(s) other than a predetermined one of the cylinder banks when the diagnostic means performs diagnosis on the fuel addition valve of the predetermined one of the cylinder banks, oxidation reaction does not occur with the catalyst in the cylinder bank(s) for which supply of fuel is prohibited, and the temperature of exhaust gas flowing into the filter decreases accordingly. Thus, if abnormality diagnosis is unnecessarily performed during operation of the internal combustion engine, it is difficult to desirably increase the temperature of exhaust gas flowing into the filter, so there is a problem that it is difficult to desirably burn and remove PM trapped in the filter.

In terms of this point, with the above configuration, because the diagnostic means is configured to perform diagnosis as to whether the catalyst and/or the fuel addition valve are abnormal only immediately after start-up of the internal combustion engine, which is a timing at which the temperature of exhaust gas flowing into the filter is originally low and the necessity to burn and remove PM trapped in the filter is low. This can prevent a situation that particulate matter trapped in the filter cannot be desirably burned and removed because the diagnostic means performs diagnosis as to whether the catalyst and/or the fuel addition valve are abnormal.

The controller for an internal combustion engine may further include exhaust gas temperature detecting means that is configured to detect the temperature of exhaust gas flowing into the filter, wherein the diagnostic means may be configured to perform the diagnosis only when the temperature of exhaust gas detected by the exhaust gas temperature detecting means is higher than or equal to a predetermined temperature.

In the configuration that the diagnostic means prohibits supplying fuel by the fuel addition valve(s) of the cylinder bank(s) other than a predetermined one of the cylinder banks when the diagnostic means performs diagnosis on the fuel addition valve of the predetermined one of the cylinder banks, oxidation reaction is hard to progress in the catalyst of the cylinder bank(s) for which supply of fuel is prohibited, and the temperature of exhaust gas flowing into the filter decreases accordingly. As a result, there occurs a problem that the temperature of exhaust gas flowing into the filter cannot be desirably increased and, as a result, it is difficult to burn and remove particulate matter trapped in the filter.

In terms of this point, with the above configuration, the diagnostic means is configured to perform diagnosis as to whether the catalyst and/or the fuel addition valve are abnormal when the temperature of exhaust gas flowing into the filter is relatively high. This can prevent a situation that particulate matter trapped in the filter cannot be desirably burned and removed because the diagnostic means performs diagnosis as to whether the catalyst and/or the fuel addition valve are abnormal.

In addition, the temperature increase detecting means may have a downstream exhaust gas temperature sensor that detects the temperature of exhaust gas flowing from the catalyst, and may be configured to detect the degree of increase in temperature of the catalyst on the basis of the temperature of exhaust gas, detected by the downstream exhaust gas temperature sensor.

Another aspect of the present disclosure provides a controller for an internal combustion engine that includes a catalyst that is provided in an exhaust passage, and a fuel addition valve that is provided upstream of the catalyst in the exhaust passage and that supplies fuel to the catalyst. The controller includes: temperature increase detecting means that is configured to detect an increase in temperature of the catalyst in response to fuel supplied by the fuel addition valve; air-fuel ratio detecting means that is provided downstream of the catalyst in the exhaust passage and that is configured to detect the air-fuel ratio of exhaust gas; and diagnostic means that is configured to diagnose whether the catalyst and/or the fuel addition valve are abnormal on the basis of whether the degree of increase in temperature of the catalyst in response to a fuel supply command for supplying fuel, which is output to the fuel addition valve by the diagnostic means, reflects the supplied fuel and whether the degree of change in air-fuel ratio of the exhaust gas in response to the output fuel supply command reflects the supplied fuel at the time of the diagnosis.

Here, the diagnostic means may be configured to diagnose that the catalyst is abnormal and the fuel addition valve is normal when the degree of increase in temperature of the catalyst in response to a fuel supply command for supplying fuel, which is output to the fuel addition valve by the diagnostic means, does not reflect the supplied fuel and when the degree of change in air-fuel ratio of the exhaust gas in response to the output fuel supply command, reflects the supplied fuel at the time of the diagnosis.

When a fuel supply command for supplying fuel is output to the fuel addition valve and then the degree of change in air-fuel ratio of exhaust gas in response to the output fuel supply command reflects the supplied fuel, at least the fuel addition valve is presumably normal. In addition, when the degree of increase in temperature of the catalyst in response to the output fuel supply command does not reflect the supplied fuel, at least one of the fuel addition valve and the catalyst is presumably abnormal. Thus, when the diagnostic means is configured to diagnose whether the catalyst and/or the fuel addition valve are abnormal as in the case of the above configuration, it is possible to accurately diagnose a situation that the catalyst is abnormal and the fuel addition valve is normal. Thus, it is possible to prevent erroneous diagnosis as to whether the catalyst and/or the fuel addition valve are abnormal.

Further another aspect of the present disclosure provides a controller for an internal combustion engine that includes a catalyst that is provided in an exhaust passage, a plurality of addition valves that are provided upstream of the catalyst in the exhaust passage and that supplies additive to the catalyst, and exhaust gas temperature detecting means that is provided downstream of the catalyst in the exhaust passage and that is configured to detect the temperature of exhaust gas, wherein the exhaust gas temperature detecting means is provided common to the plurality of addition valves provided upstream of the exhaust gas temperature detecting means. The controller includes: control means that is configured to execute at least one of abnormality diagnosis control and supply rate learning control on the addition valves one by one on the basis of the degree of change in the temperature of exhaust gas in response to an additive supply command for supplying additive, which is output to the addition valves by the control means, wherein the control means is configured to output the additive supply command to only a predetermined one of the addition valves when the control means executes the at least one of the controls on the predetermined one of the addition valves.

With the above configuration, when the control means executes at least one of abnormality diagnosis control and supply rate learning control on a predetermined one of the addition valves, the control means is configured to prohibit supplying additive from the addition valve(s) other than the predetermined one of the addition valves. By so doing, it is possible to accurately recognize the state of additive supply of the predetermined one of the addition valves on the basis of the degree of change in temperature of exhaust gas in response to the output additive supply command. Thus, in the internal combustion engine in which the exhaust gas temperature detecting means is provided common to the plurality of addition valves provided upstream of the exhaust gas temperature detecting means, it is possible to accurately execute abnormality diagnosis control or supply rate learning control on the addition valves.

In addition, the controller for an internal combustion engine may further include clogging prevention means that is configured to, when a predetermined condition is satisfied, execute clogging prevention control for outputting an additive supply command to the plurality of addition valves in order to prevent additive from clogging inside the plurality of addition valves, wherein the control means may be configured to, when the predetermined condition is satisfied, execute at least one of abnormality diagnosis control and supply rate learning control on the addition valves instead of the clogging prevention control.

When the control means executes at least one of abnormality diagnosis control and supply rate learning control on the addition valves, this causes a problem that the consumption of additive deteriorates. On the other hand, when a predetermined condition is satisfied, one control means executes clogging prevention control that outputs an additive supply command to the plurality of addition valves to prevent additive from clogging inside the fuel addition valves.

With the above configuration, when the clogging prevention control execution condition is satisfied, at least one of abnormality diagnosis control and supply rate learning control on the addition valves is executed instead of the clogging prevention control, so it is possible to suppress deterioration in additive consumption in comparison with the configuration that the at least one of the controls is executed at a timing that is different from the timing at which the clogging prevention control is executed.

In the controller for an internal combustion engine, a filter may be provided downstream of the plurality of addition valves in the exhaust passage and may trap particulate matter contained in exhaust gas, wherein the control means may be configured to, before the control means executes the abnormality diagnosis control on the addition valves one by one, diagnose whether the plurality of addition valves as a whole are abnormal on the basis of the degree of change in the temperature of exhaust gas in response to an additive supply command, which is output to the plurality of addition valves, and then the control means may prohibit executing abnormality diagnosis control on the addition valves one by one when the control means diagnoses that the plurality of addition valves as a whole are not abnormal.

In the configuration that the control means prohibits supplying additive from the addition valve(s) other than a predetermined one of the addition valves in order to execute abnormality diagnosis control on the predetermined one of the addition valves, there is no additive supply from the addition valve(s) other than the predetermined one of the addition valves, so the temperature of exhaust gas flowing into the filter decreases accordingly. As a result, when control for increasing the temperature of exhaust gas flowing into the filter to burn and remove particulate matter trapped in the filter is being executed, there is a possibility that it is difficult to desirably burn and remove particulate matter.

In terms of this point, with the above configuration, the control means is configured to, before the control means executes abnormality diagnosis control on the addition valves one by one, diagnose whether the plurality of addition valves as a whole are abnormal, and the control means is configured to prohibit executing abnormality diagnosis control on the addition valves one by one when the control means diagnoses that the plurality of addition valves as a whole are not abnormal. By so doing, it is possible to prevent abnormality diagnosis control from being unnecessarily executed on the addition valves one by one when it is not necessary to execute the abnormality diagnosis control on the addition valves one by one. This can suppress a situation that it is difficult to desirably burn and remove particulate matter accumulated in the filter because of unnecessary execution of abnormality diagnosis control on the addition valves one by one.

In addition, the internal combustion engine may include a plurality of cylinder banks, the exhaust passage may be provided for each of the cylinder banks, the exhaust passages may be collected at a collecting portion downstream of the exhaust passages, the exhaust gas temperature detecting means may be provided downstream of the collecting portion in the exhaust passages, and the addition valve and the catalyst both may be provided upstream of the collecting portion for each of the cylinder banks in a corresponding one of the exhaust passages.

In addition, the plurality of addition valves may be provided upstream of the catalyst in the exhaust passage.

Yet another aspect of the present disclosure provides a controller for an internal combustion engine that includes a catalyst that is provided in an exhaust passage, a plurality of addition valves that are provided upstream of the catalyst in the exhaust passage and that supplies additive to the catalyst, and air-fuel ratio detecting means that is provided downstream of the catalyst in the exhaust passage and that is configured to detect the air-fuel ratio of exhaust gas, wherein the exhaust gas temperature detecting means is provided common to the plurality of addition valves provided upstream of the exhaust gas temperature detecting means. The controller includes: control means that is configured to execute at least one of abnormality diagnosis control and supply rate learning control on the addition valves one by one on the basis of the degree of change in the air-fuel ratio in response to an additive supply command, which is output to the addition valves by the control means, wherein the control means is configured to output the additive supply command to only a predetermined one of the addition valves when the control means executes the at least one of the controls on the predetermined one of the addition valves.

With the above configuration, when the control means executes at least one of abnormality diagnosis control and supply rate learning control on a predetermined one of the addition valves, the control means is configured to prohibit supplying additive from the addition valve(s) other than the predetermined one of the addition valves. By so doing, it is possible to accurately recognize the state of additive supply of the predetermined one of the addition valves on the basis of the degree of change in air-fuel ratio of exhaust gas in response to the output additive supply command. Thus, in the internal combustion engine in which the air-fuel ratio detecting means is provided common to the plurality of addition valves provided upstream of the exhaust gas temperature detecting means, it is possible to accurately execute abnormality diagnosis control or supply rate learning control on the addition valves.

The controller for an internal combustion engine may further include clogging prevention means that is configured to, when a predetermined condition is satisfied, execute clogging prevention control for outputting an additive supply command to the plurality of addition valves in order to prevent additive from clogging inside the plurality of addition valves, wherein the control means may be configured to, when the predetermined condition is satisfied, execute at least one of abnormality diagnosis control and supply rate learning control on the addition valves instead of the clogging prevention control.

When the control means executes at least one of abnormality diagnosis control and supply rate learning control on the addition valves, this causes a problem that the consumption of additive deteriorates. On the other hand, when a predetermined condition is satisfied, one control means executes clogging prevention control that outputs an additive supply command to the plurality of addition valves to prevent additive from clogging inside the fuel addition valves.

With the above configuration, when the clogging prevention control execution condition is satisfied, at least one of abnormality diagnosis control and supply rate learning control on the addition valves is executed instead of the clogging prevention control, so it is possible to suppress deterioration in additive consumption in comparison with the configuration that the at least one of the controls is executed at a timing that is different from the timing at which the clogging prevention control is executed.

In the controller for an internal combustion engine, a filter may be provided downstream of the plurality of addition valves in the exhaust passage and may trap particulate matter contained in exhaust gas, wherein the control means may be configured to, before the control means executes the abnormality diagnosis control on the addition valves one by one, diagnose whether the plurality of addition valves as a whole are abnormal on the basis of the degree of change in the air-fuel ratio in response to an additive supply command, which is output to the plurality of addition valves, and then the control means may be configured to prohibit executing abnormality diagnosis control on the addition valves one by one when the control means diagnoses that the plurality of addition valves as a whole are not abnormal.

In the configuration that the control means prohibits supplying additive from the addition valve(s) other than a predetermined one of the addition valves in order to execute abnormality diagnosis control on the predetermined one of the addition valves, there is no additive supply from the addition valve(s) other than the predetermined one of the addition valves, so the temperature of exhaust gas flowing into the filter decreases accordingly. As a result, when control for increasing the temperature of exhaust gas flowing into the filter to burn and remove particulate matter trapped in the filter is being executed, there is a possibility that it is difficult to desirably burn and remove particulate matter.

In terms of this point, with the above configuration, the control means is configured to, before the control means executes abnormality diagnosis control on the addition valves one by one, diagnose whether the plurality of addition valves as a whole are abnormal, and the control means is configured to prohibit executing abnormality diagnosis control on the addition valves one by one when the control means diagnoses that the plurality of addition valves as a whole are not abnormal. By so doing, it is possible to prevent abnormality diagnosis control from being unnecessarily executed on the addition valves one by one when it is not necessary to execute the abnormality diagnosis control on the addition valves one by one. This can suppress a situation that it is difficult to desirably burn and remove particulate matter accumulated in the filter because abnormality diagnosis control is unnecessarily executed on the addition valves one by one.

In addition, the internal combustion engine may include a plurality of cylinder banks, the exhaust passage may be provided for each of the cylinder banks, the exhaust passages may be collected at a collecting portion downstream of the exhaust passages, the air-fuel ratio detecting means may be provided downstream of the collecting portion in the exhaust passages, and the addition valve and the catalyst both may be provided upstream of the collecting portion for each of the cylinder banks in a corresponding one of the exhaust passages.

In addition, in the controller for an internal combustion engine, the plurality of addition valves may be provided upstream of the catalyst in the exhaust passage.

In addition, the additive may be fuel for the internal combustion engine.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic configuration diagram that shows the schematic configuration of a controller for an internal combustion engine according to a first embodiment of the invention;
FIG. 2 is a table for illustrating the principle of abnormality diagnosis according to the first embodiment;
FIG. 3 is a flowchart that shows the procedure of abnormality diagnosis control according to the first embodiment;
FIG. 4 is a flowchart that shows the procedure of the abnormality diagnosis control according to the first embodiment;
FIG. 5 is a schematic configuration diagram that shows the schematic configuration of a controller for an internal combustion engine according to a second embodiment of the invention;
FIG. 6 is a flowchart that shows the procedure of abnormality diagnosis control according to the second embodiment;
FIG. 7 is a flowchart that shows the procedure of supply rate learning control on a fuel addition valve, executed by a controller for an internal combustion engine according to a fourth embodiment of the invention;
FIG. 8 is a schematic configuration diagram that shows the schematic configuration of a controller for an internal combustion engine according to a first alternative embodiment to the first embodiment of the invention;
FIG. 9 is a schematic configuration diagram that shows the schematic configuration of a controller for an internal combustion engine according to a second alternative embodiment to the first embodiment of the invention;
FIG. 10 is a schematic configuration diagram that shows the schematic configuration of a controller for an internal combustion engine according to a third alternative embodiment to the first embodiment of the invention;
FIG. 11 is a schematic configuration diagram that shows the schematic configuration of a controller for an internal combustion engine according to a fourth alternative embodiment to the first embodiment of the invention;
FIG. 12 is a schematic configuration diagram that shows the schematic configuration of a controller for an internal combustion engine according to a fifth alternative embodiment to the first embodiment of the invention; and
FIG. 13 is a schematic configuration diagram that shows the schematic configuration of a controller for an internal combustion engine according to an alternative embodiment to the second to fourth embodiments of the invention.

### DETAILED DESCRIPTION OF EMBODIMENTS

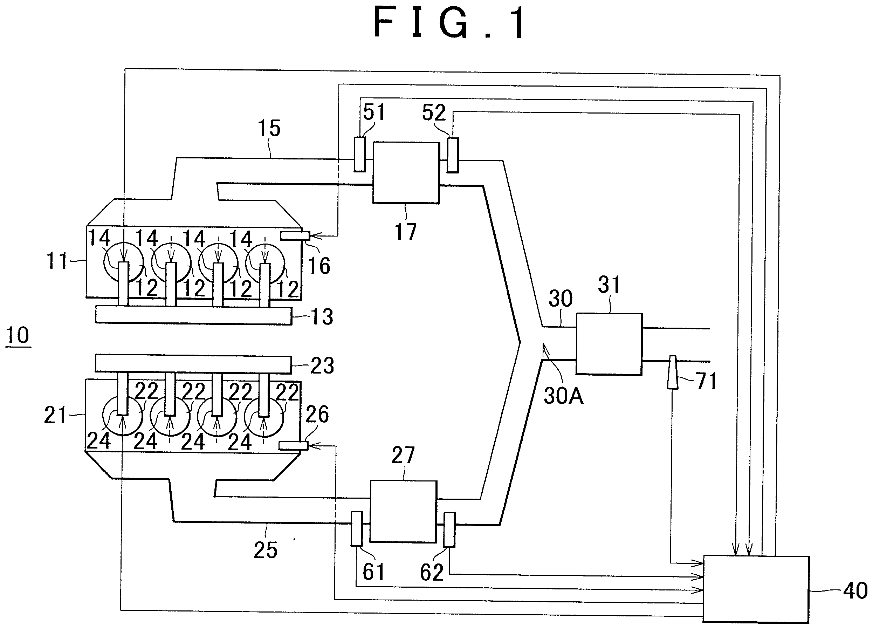

Hereinafter, a first embodiment that implements a controller for an internal combustion engine according to the aspect of the invention as a controller for a V-type eight cylinder diesel engine (hereinafter, "internal combustion engine 10") will be described with reference to FIG. 1 to FIG. 4.

FIG. 1 shows the schematic configuration of the controller for an internal combustion engine according to the present embodiment. As shown in the drawing, the internal combustion engine 10 includes two cylinder banks (the cylinder bank on the upper side in the drawing is termed a first cylinder bank 11, and the cylinder bank on the lower side in the drawing is termed a second cylinder bank 21). Each of the cylinder banks is formed of four cylinders.

The cylinder banks 11 and 21 are respectively provided with common-rail pipes 13 and 23. In addition, each cylinder is provided with a fuel injection valve 14 or 24. The fuel injection valves 14 each are connected to the common-rail pipe 13 and directly inject fuel into corresponding combustion chambers 12. Similarly, the fuel injection valves 24 each are connected to the common-rail pipe 23 and directly inject fuel into corresponding combustion chambers 22. Then, fuel that is pumped from a fuel pump (not shown) to the common-rail pipe 13 is accumulated in the common-rail pipe 13, and is injected into the combustion chambers 12 of the respective cylinders through the fuel injection valves 14. Similarly, fuel that is pumped from the fuel pump to the common-rail pipe 23 is accumulated in the common-rail pipe 23, and is injected into the combustion chambers 22 of the respective cylinders through the fuel injection valves 24. Note that an intake passage is connected to each of the cylinder banks 11 and 21.

A first exhaust pipe 15 and a second exhaust pipe 25 are separately connected to the cylinder banks 11 and 21, respectively. These exhaust pipes 15 and 25 are connected to a common third exhaust pipe 30 provided downstream of the exhaust pipes 15 and 25. Note that these first exhaust pipe 15, second exhaust pipe 25 and third exhaust pipe 30 correspond to an exhaust passage (exhaust passages) according to the aspect of the invention.

Oxidation catalysts 17 and 27 are respectively provided in the first exhaust pipe 15 and the second exhaust pipe 25. In addition, a fuel addition valve 16 is provided upstream of the oxidation catalyst 17 in the first exhaust pipe 15, and the fuel addition valve 16 adds fuel to exhaust gas flowing into the oxidation catalyst 17 to supply fuel to the oxidation catalyst 17. Similarly, a fuel addition valve 26 is provided upstream of the oxidation catalyst 27 in the second exhaust pipe 25, and the fuel addition valve 26 adds fuel to exhaust gas flowing into the oxidation catalyst 27 to supply fuel to the oxidation catalyst 27. Note that fuel is supplied from the fuel pump (not shown) to these fuel addition valves 16 and 26.

A filter 31 is provided in the third exhaust pipe 30 downstream of a collecting portion 30A at which the first exhaust pipe 15 and the second exhaust pipe 25 are collected. The filter 31 traps particulate matter (hereinafter, "PM") contained in exhaust gas.

In the above configuration, air supplied to each cylinder through the intake passage and fuel injected from a corresponding one of the fuel injection valves 14 are mixed in a corresponding one of the combustion chambers 12, and the thus mixed air-fuel mixture is subjected to combustion in the combustion chamber 12. Similarly, air supplied to each cylinder through the intake passage and fuel injected from a corresponding one of the fuel injection valves 24 are mixed in a corresponding one of the combustion chambers 22, and the thus mixed air-fuel mixture is subjected to combustion in the combustion chamber 22. Then, the output shaft of the engine is driven for rotation by expansion energy based on the combustion. In addition, exhaust gas produced through combustion in each combustion chamber 12 is exhausted to the exhaust pipe 15, and hydrocarbons (HC) and carbon dioxide (CO) that are contained in the exhaust gas are oxidized and purified when the exhaust gas passes through the oxidation catalyst 17. Similarly, exhaust gas produced through combustion in each combustion chamber 22 is exhausted to the exhaust pipe 25, and hydrocarbons (HC) and carbon dioxide (CO) that are contained in the exhaust gas are oxidized and purified when the exhaust gas passes through the oxidation catalyst 27. In addition, exhaust gas that has passed through the oxidation catalyst 17 or 27 is exhausted to the third exhaust pipe 30, and PM contained in the exhaust gas is trapped when passing through the filter 31.

An electronic control unit 40 that controls the internal combustion engine 10 has a microcomputer. The electronic control unit 40 receives detection signals of various sensors for detecting the operating state of the engine.

The various sensors, for example, include upstream exhaust gas temperature sensors 51 and 61, downstream exhaust gas temperature sensors 52 and 62 and an air-fuel ratio sensor 71. The upstream exhaust gas temperature sensors 51 and 61 each detect the temperature Tgin of exhaust gas flowing into the corresponding oxidation catalyst 17 or 27. The downstream exhaust gas temperature sensors 52 and 62 each detect the temperature Tgout of exhaust gas flowing from the corresponding oxidation catalyst 17 or 27. The air-fuel ratio sensor 71 detects the air-fuel ratio AF of exhaust gas. Here, the upstream exhaust gas temperature sensor 51 is provided upstream of the oxidation catalyst 17 in the exhaust pipe 15, and the upstream exhaust gas temperature sensor 61 is provided upstream of the oxidation catalyst 27 in the exhaust pipe 25. In addition, the downstream exhaust gas temperature sensor 52 is provided downstream of the oxidation catalyst 17 in the exhaust pipe 15, and the downstream exhaust gas temperature sensor 62 is provided downstream of the oxidation catalyst 27 in the exhaust pipe 25. In addition, the air-fuel ratio sensor 71 is provided downstream of the filter 31 in the third exhaust pipe 30. Other than the above, an accelerator operation amount sensor, an engine rotational speed sensor, an intake air flow rate sensor, or the like, (not shown) is provided where necessary. The accelerator operation amount sensor detects the accelerator operation amount that is the amount of depression of an accelerator pedal. The engine rotational speed sensor detects the engine rotational speed that is the rotational speed of the output shaft of the engine. The intake air flow rate sensor detects the intake air flow rate that is the flow rate of intake air supplied to the combustion chambers 12 and 22 through the intake passage.

The electronic control unit 40 carries out various computations on the basis of the detection signals of the various sensors, and executes operation control on the fuel injection valves 14 and 24, operation control on the fuel addition valves 16 and 26, and the like, on the basis of the results of computations.

In addition, the electronic control unit 40 estimates the accumulation amount of PM accumulated in the filter 31 on the basis of the operating state of the engine. Then, when the accumulation amount of PM is larger than or equal to a predetermined amount, the fuel addition valves 16 and 26 are operated to add fuel to exhaust gas flowing into the oxidation catalysts 17 and 27. This causes oxidation reaction with the oxidation catalysts 17 and 27 to increase the temperature of exhaust gas flowing into the filter 31 to thereby burn and remove the accumulated PM.

In addition, the electronic control unit 40, where necessary, operates the fuel injection valves 14 and 24 to carry out post injection. In the post injection, fuel is injected into the cylinders during a period from an expansion stroke to an exhaust stroke, that is, a timing at which fuel does not contribute to combustion of the engine. By so doing, unburned fuel is supplied to the oxidation catalysts 17 and 27.

Incidentally, in the thus configured internal combustion engine 10, when the oxidation catalyst 17 or 27 is abnormal, even when fuel is supplied to the abnormal oxidation catalyst 17 or 27, oxidation reaction with that oxidation catalyst 17 or 27 does not desirably progress. Thus, there occurs a problem that the temperature of exhaust gas flowing into the filter 31 cannot be desirably increased and, as a result, it is difficult to burn and remove PM trapped in the filter 31.

Then, for example, when a fuel supply command signal for supplying fuel is output to each of the fuel addition valves 16 and 26, and the degree of increase in temperature ΔTC of a corresponding one of the oxidation catalysts 17 and 27 in response to the output command signal is lower than or equal to a predetermined value, that oxidation catalyst 17 or 27 is conceivably diagnosed to be abnormal on the basis of the above fact. However, in the thus configured diagnostic mode, even when the fuel addition valve 16 or 26 is abnormal, the degree of increase in temperature ΔTC of a corresponding one of the oxidation catalysts 17 and 27 may be lower than or equal to the predetermined value. Thus, despite the fact that the oxidation catalyst 17 or 27 is normal, the oxidation catalyst 17 or 27 may be erroneously diagnosed to be abnormal.

On the other hand, when the fuel addition valve 16 or 26 is abnormal, it is impossible to supply fuel to a corresponding one of the oxidation catalysts 17 and 27, and oxidation reaction with the corresponding one of the oxidation catalysts 17 and 27 does not progress desirably. Thus, there occurs a problem that the temperature of exhaust gas flowing into the filter 31 cannot be desirably increased and, as a result, it is difficult to burn and remove PM trapped in the filter 31.

Then, when a fuel supply command signal for supplying fuel is output to each of the fuel addition valves 16 and 26, and the degree of increase in temperature ΔTC of a corresponding one of the oxidation catalysts 17 and 27 in response to the output command signal is lower than or equal to a predetermined value, that fuel addition valve 16 or 26 is conceivably diagnosed to be abnormal on the basis of the above fact. However, in the thus configured diagnostic mode, even when the oxidation catalyst 17 or 27 is abnormal, the degree of increase in temperature of a corresponding one of the oxidation catalysts 17 and 27 may be lower than or equal to the predetermined value. Thus, despite the fact that the fuel addition valve 16 or 26 is normal, the fuel addition valve 16 or 26 may be erroneously diagnosed to be abnormal.

Then, in the present embodiment, the electronic control unit 40 is configured to output a fuel supply command to the fuel addition valve 16 (26), and to diagnose whether the oxidation catalyst 17 (27) and/or the fuel addition valve 16 (26) are abnormal on the basis of the degree of increase in temperature ΔTC of the oxidation catalyst 17 (27) and the degree of change in air-fuel ratio ΔA/F of exhaust gas in response to the output fuel supply command. In addition, the electronic control unit 40 outputs a post injection command to the fuel injection valves 14 (24), and then diagnoses whether the oxidation catalyst 17 (27) and/or the fuel addition valve 16 (26) are abnormal on the basis of the degree of increase in temperature ΔTC of the oxidation catalyst 17 (27) in response to the output post injection command. This prevents erroneous diagnosis as to whether the oxidation catalyst 17 (27) and/or the fuel addition valve 16 (26) are abnormal. Here, in the present embodiment, the electronic control unit 40 detects the degree of increase in temperature ΔTC of the oxidation catalyst 17 or 27 in response to fuel supplied by the fuel addition valve 16 (26) or the fuel injection valves 14 (24) on the basis of the temperature of exhaust gas, detected by the downstream exhaust gas temperature sensor 52 (62). Note that the electronic control unit 40 and the downstream exhaust gas temperature sensor 52 (62) correspond to temperature increase detecting means according to the aspect of the invention.

As in the case of the present embodiment, in the internal combustion engine 10 in which the plurality of fuel addition valves 16 and 26 are provided upstream of the air-fuel ratio sensor 71, when a fuel supply command is output to the fuel addition valves 16 and 26 of the cylinder banks 11 and 21 at the same time at the time of diagnosing whether the oxidation catalyst 17 or 27 and/or the fuel addition valve 16 or 26 are abnormal, it is difficult to prevent erroneous diagnosis as to whether the oxidation catalyst 17 or 27 and/or the fuel addition valve 16 or 26 are abnormal because of the following reason. That is, for example, when the normal fuel addition valve and the abnormal fuel addition valve are mixedly present in the fuel addition valves 16 and 26 of the cylinder banks 11 and 21, as a fuel supply command is output to the fuel addition valves 16 and 26 at the same time, fuel is supplied by the normal fuel addition valve, and the degree of change in air-fuel ratio ΔA/F of exhaust gas may possibly reflect the supplied fuel. Therefore, when the degree of change in air-fuel ratio ΔA/F of exhaust gas in response to the fuel supply command output to the fuel addition valves 16 and 26 reflects the supplied fuel, it is difficult to recognize that the abnormal fuel addition valve is present. In addition, when the degree of change in air-fuel ratio ΔA/F of exhaust gas does not reflect the supplied fuel, it is possible to recognize that the abnormal fuel addition valve is present; however, it is impossible to identify the abnormal fuel addition valve.

Then, in the present embodiment, the electronic control unit 40 performs the above diagnosis on the fuel addition valve 16 (26) one by one. That is, when the electronic control unit 40 performs diagnosis on the oxidation catalyst 17 (27) and the fuel addition valve 16 (26) of a predetermined cylinder bank 11 (21), the electronic control unit 40 prohibits supplying fuel by the fuel addition valve 26 (16) other than the fuel addition valve 16 (26) of the predetermined cylinder bank 11 (21). By so doing, when the abnormal fuel addition valve 16 (26) is present, the abnormal fuel addition valve 16 (26) is identified.

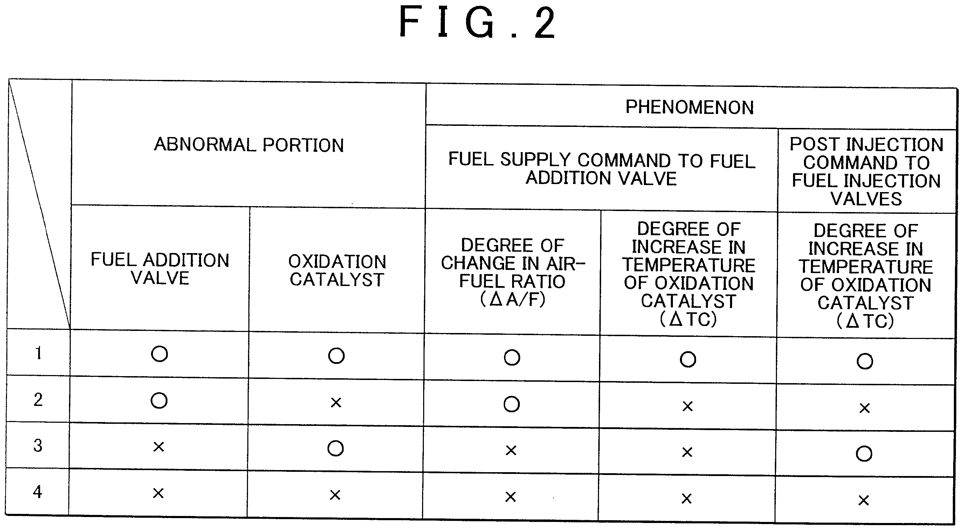

Hereinafter, the principle of abnormality diagnosis will be described with reference to FIG. 2. Note that FIG. 2 is a table that shows the relationship among an abnormal portion, the degree of change in air-fuel ratio ΔA/F in response to a fuel supply command output to the fuel addition valve 16 (26), the degree of increase in temperature ΔTC of the oxidation catalyst 17 (27) and the degree of increase in temperature ΔTC of the oxidation catalyst 17 (27) in response to a fuel supply command output to the fuel injection valves 14 (24). That is, when the fuel addition valve 16 (26) or the oxidation catalyst 17 (27) is normal, "O" is put in the applicable fields; when the fuel addition valve 16 (26) or the oxidation catalyst 17 (27) is abnormal, "×" is put in the applicable fields. In addition, when the degree of change in air-fuel ratio ΔA/F of exhaust gas or the degree of increase in temperature ΔTC of the oxidation catalyst 17 (27) reflects the supplied fuel, "O" is put in the applicable fields; when the degree of change in air-fuel ratio ΔA/F of exhaust gas or the degree of increase in temperature ΔTC of the oxidation catalyst 17 (27) does not reflect the supplied fuel, "×" is put in the applicable fields.

### <Case 1 (Both the fuel addition valve 16 (26) and the oxidation catalyst 17 (27) are normal)>

When the electronic control unit 40 outputs a fuel supply command to the fuel addition valve 16 (26) and then the degree of increase in temperature ΔTC of the oxidation catalyst 17 (27) in response to the output fuel supply command reflects the supplied fuel, both the fuel addition valve 16 (26) and the oxidation catalyst 17 (27) are normal.

### <Case 2 (The oxidation catalyst 17 (27) is abnormal, and the fuel addition valve 16 (26) is normal)>

When the electronic control unit 40 outputs a fuel supply command to the fuel addition valve 16 (26) and then the degree of increase in temperature ΔTC of the oxidation catalyst 17 (27) in response to the output fuel supply command does not reflect the supplied fuel, it may be determined that at least one of the fuel addition valve 16 (26) and the oxidation catalyst 17 (27) is abnormal (the cases 2, 3 and 4 are applicable in the table). In addition, when the degree of change in air-fuel ratio ΔA/F of exhaust gas in response to the output fuel supply command reflects the supplied fuel, it may be determined that at least the fuel addition valve 16 (26) is normal (the cases 1 and 2 are applicable in the table). From the above, when a fuel supply command is output to the fuel addition valve 16 (26) and then the degree of increase in temperature ΔTC of the oxidation catalyst 17 (27) in response to the output fuel supply command does not reflect the supplied fuel, and when the degree of change in air-fuel ratio ΔA/F of exhaust gas in response to the output fuel supply command reflects the supplied fuel, it may be determined that the oxidation catalyst 17 (27) is abnormal and the fuel addition valve 16 (26) is normal.

### <Case 3 (The oxidation catalyst 17 (27) is normal, and the fuel addition valve 16 (26) is abnormal)>

When the electronic control unit 40 outputs a fuel supply command to the fuel addition valve 16 (26) and then the degree of increase in temperature ΔTC of the oxidation catalyst 17 (27) in response to the output fuel supply command does not reflect the supplied fuel, it may be determined that at least one of the fuel addition valve 16 (26) and the oxidation catalyst 17 (27) is abnormal (the cases 2, 3 and 4 are applicable in the table). In addition, when the electronic control unit 40 outputs a post injection command to the fuel injection valves 14 (24) and then the degree of increase in temperature ΔTC of the oxidation catalyst 17 (27) in response to the output fuel supply command reflects the supplied fuel, it may be determined that at least the oxidation catalyst 17 (27) is normal (the cases 1 and 3 are applicable in the table). From the above, when a fuel supply command is output to the fuel addition valve 16 (26) and then the degree of increase in temperature ΔTC of the oxidation catalyst 17 (27) in response to the output fuel supply command does not reflect the supplied fuel, and when a post injection command is output to the fuel injection valves 14 (24) and then the degree of increase in temperature ΔTC of the oxidation catalyst 17 (27) in response to the output post injection command reflects the supplied fuel, it may be determined that the oxidation catalyst 17 (27) is normal, and the fuel addition valve 16 (26) is abnormal.

### <Case 4 (Both the oxidation catalyst 17 (27) and the fuel addition valve 16 (26) are abnormal)>

When the electronic control unit 40 outputs a fuel supply command to the fuel addition valve 16 (26) and then the degree of change in air-fuel ratio ΔA/F of exhaust gas in response to the output fuel supply command does not reflect the supplied fuel, it may be determined that at least the fuel addition valve 16 (26) is abnormal (the cases 3 and 4 are applicable in the table). In addition, when the electronic control unit 40 outputs a post injection command to the fuel injection valves 14 (24) and then the degree of increase in temperature ΔTC of the oxidation catalyst 17 (27) in response to the output post injection command does not reflect the supplied fuel, it may be determined that at least the oxidation catalyst 17 (27) is abnormal (the cases 2 and 4 are applicable in the table). From the above, when a fuel supply command is output to the fuel addition valve 16 (26) and then the degree of change in air-fuel ratio ΔA/F of exhaust gas in response to the output fuel supply command does not reflect the supplied fuel, and when a post injection command is output to the fuel injection valves 14 (24) and then the degree of increase in temperature ΔTC of the oxidation catalyst 17 (27) in response to the output post injection command does not reflect the supplied fuel, it may be determined that both the oxidation catalyst 17 (27) and the fuel addition valve 16 (26) are abnormal.

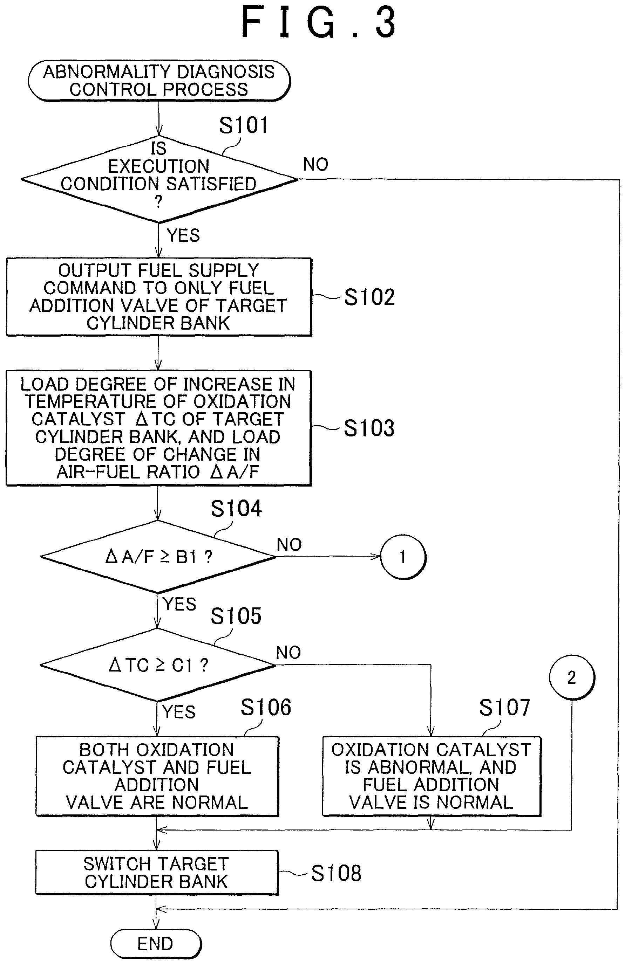

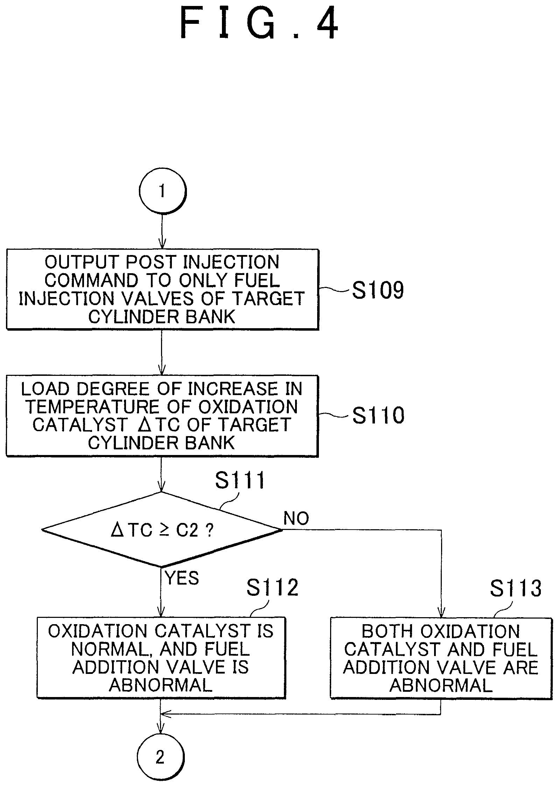

Note that the principle of the abnormality diagnosis assumes that the fuel injection valves 14 and 24, the downstream exhaust gas temperature sensors 52 and 62 and the air-fuel ratio sensor 71 all are normal. Next, abnormality diagnosis control according to the present embodiment will be described with reference to FIG. 3 and FIG. 4. Note that FIG. 3 and FIG. 4 are flowcharts that show the procedure of abnormality diagnosis control. A series of processes shown in the flowcharts is repeatedly executed by the electronic control unit 40 during operation of the internal combustion engine 10.

As shown in FIG. 3, in this process, first, it is determined whether an abnormality diagnosis execution condition is satisfied (step S101). The execution condition here may include a condition that a period of time elapsed from completion of start-up of the internal combustion engine 10 falls within a predetermined range, that is, a condition immediately after start-up of the internal combustion engine 10, a condition that abnormality diagnosis on the oxidation catalysts 17 and 27 and fuel addition valves 16 and 26 of all the cylinder banks 11 and 21 is not complete by the previous control cycle, or the like. Here, the reason why abnormality diagnosis is performed only immediately after start-up of the internal combustion engine 10 will be described. That is, in the present embodiment, when the electronic control unit 40 performs diagnosis on the oxidation catalyst 17 (27) and fuel addition valve 16 (26) of a predetermined cylinder bank 11 (21), the electronic control unit 40 prohibits supplying fuel by the fuel addition valve 26 (16) of the other cylinder bank 21 (11). Therefore, in the cylinder bank 21 (11) for which supply of fuel is prohibited, oxidation reaction with the oxidation catalyst 27 (17) does not occur, and the temperature of exhaust gas flowing into the filter 31 decreases accordingly. Thus, if abnormality diagnosis is unnecessarily performed during operation of the internal combustion engine 10, it is difficult to desirably increase the temperature of exhaust gas flowing into the filter 31, so there is a problem that it is difficult to desirably burn and remove PM trapped in the filter 31. Then, in the present embodiment, abnormality diagnosis is performed only immediately after start-up of the internal combustion engine 10, which is a timing at which the temperature of exhaust gas flowing into the filter 31 is originally low and the necessity to burn and remove PM trapped in the filter 31 is low. This prevents a situation that PM trapped in the filter 31 cannot be desirably burned and removed because abnormality diagnosis is performed.

Then, in step S101, when the execution condition is not satisfied ("NO" in step S101), the series of processes once ends. On the other hand, in step S101, when the execution condition is satisfied ("YES" in step S101), a fuel supply command is subsequently output to only the fuel addition valve 16 (26) of the cylinder bank 11 (21) subjected to abnormality diagnosis (step S102). Then, after that, the degree of increase in temperature ΔTC of the oxidation catalyst 17 (27) of the cylinder bank 11 (21) subjected to abnormality diagnosis and the degree of change in air-fuel ratio ΔA/F are loaded (step S103). Here, the degree of increase in temperature ΔTC of the oxidation catalyst 17 (27) is calculated as a difference between the exhaust gas temperatures Tgout before and after the fuel supply command is output to the fuel addition valve 16 (26). In addition, the degree of change in air-fuel ratio ΔA/F is calculated as a difference between the air-fuel ratios A/F before and after the fuel supply command is output to the fuel addition valve 16 (26). Note that there is a predetermined time delay from when the fuel supply command is output to the fuel addition valve 16 (26) to when the exhaust gas temperature Tgout actually changes or when the air-fuel ratio A/F actually changes, so, in the present embodiment, the process of step S103 is executed after a predetermined period of time has elapsed from when the process of step S102 is executed.

After the degree of increase in temperature ΔTC of the oxidation catalyst 17 (27) and the degree of change in air-fuel ratio ΔA/F are loaded, it is determined whether the degree of change in air-fuel ratio ΔA/F is higher than or equal to a predetermined value B1 (step S104). Here, the predetermined value B1 is a value that is empirically set in advance. Then, when the degree of change in air-fuel ratio ΔA/F is not higher than or equal to the predetermined value B1 ("NO" in step S104), it is determined that the degree of change in air-fuel ratio ΔA/F of exhaust gas in response to the fuel supply command does not reflect the supplied fuel, and then the process proceeds to step S109.

On the other hand, in step S104, when the degree of change in air-fuel ratio ΔA/F is higher than or equal to the predetermined value B1 ("YES" in step S104), the degree of change in air-fuel ratio ΔA/F of exhaust gas in response to the above fuel supply command presumably reflects the supplied fuel, and then it is determined whether the degree of increase in temperature ΔTC of the oxidation catalyst 17 (27) is higher than or equal to a predetermined value C1 (step S105). Here, the predetermined value C1 is a value that is empirically set in advance. Then, when the degree of increase in temperature ΔTC of the oxidation catalyst 17 (27) is not higher than or equal to the predetermined value C1 ("NO" in step S105), the degree of increase in temperature ΔTC of the oxidation catalyst 17 (27) in response to the above fuel supply command presumably does not reflect the supplied fuel and then it is diagnosed that the oxidation catalyst 17 (27) is abnormal and the fuel addition valve 16 (26) is normal (step S106).

On the other hand, in step S105, when the degree of increase in temperature ΔTC of the oxidation catalyst 17 (27) is higher than or equal to the predetermined value C1 ("YES" in step S105), the degree of increase in temperature ΔTC of the oxidation catalyst 17 (27) in response to the above fuel supply command presumably reflects the supplied fuel and then it is diagnosed that both the fuel addition valve 16 (26) and the oxidation catalyst 17 (27) are normal (step S106).

In step S109, a post injection command is output to the fuel injection valves 14 (24) of the cylinder bank 11 (21) subjected to abnormality diagnosis. Then, the degree of increase in temperature ΔTC of the oxidation catalyst 17 (27) of the cylinder bank 11 (21) subjected to abnormality diagnosis is loaded (step S110). Here, the degree of increase in temperature ΔTC of the oxidation catalyst 17 (27) is calculated as a difference between the exhaust gas temperatures Tgout before and after the post injection command is output to the fuel injection valves 14 (24). Here, the process of step S110 is executed after a predetermined period of time has elapsed from when the process of step S109 is executed. This is because of the same reason as the process of step S103.

When the degree of increase in temperature ΔTC of the oxidation catalyst 17 (27) is loaded in this way, it is then determined whether the degree of increase in temperature ΔTC of the oxidation catalyst 17 (27) is higher than or equal to a predetermined value C2 (step Sill). Here, the predetermined value C2 is a value that is empirically set in advance. Then, when the degree of increase in temperature ΔTC of the oxidation catalyst 17 (27) is not higher than or equal to the predetermined value C2 ("NO" in step S111), the degree of increase in temperature ΔTC of the oxidation catalyst 17 (27) in response to the post injection command presumably does not reflect the supplied fuel, and then it is diagnosed that both the fuel addition valve 16 (26) and the oxidation catalyst 17 (27) are abnormal (step S112).

On the other hand, in step S111, when the degree of increase in temperature ΔTC of the oxidation catalyst 17 (27) is higher than or equal to the predetermined value C1 ("YES" in step S111), the degree of increase in temperature ΔTC of the oxidation catalyst 17 (27) in response to the post injection command presumably reflects the supplied fuel, and then it is diagnosed that the oxidation catalyst 17 (27) is normal and the fuel addition valve 16 (26) is abnormal (step S113).

When abnormality diagnosis on the target cylinder bank 11 (21) is complete in step S106, S107, S112 or S113, the target cylinder bank 21 (11) is switched (step S108), and then the series of processes once ends.

In the above abnormality diagnosis control, when the degree of change in air-fuel ratio ΔA/F of exhaust gas in response to the output fuel supply command to the fuel addition valve 16 (26) reflects the supplied fuel ("YES" in step S104), it is possible to accurately diagnose whether both the oxidation catalyst 17 (27) and/or the fuel addition valve 16 (26) are abnormal, so it is not necessary to output a post injection command to the fuel injection valve 14 (24) thereafter. Then, in order to suppress deterioration in fuel consumption due to the post injection carried out by the fuel injection valve 14 (24), the electronic control unit 40 is configured not to proceed to step S109, that is, prohibit outputting a post injection command to the fuel injection valve 14 (24).

With the controller for an internal combustion engine according to the above described present embodiment, the following advantageous effects may be obtained.
(1) When the electronic control unit 40 outputs a fuel supply command to the fuel addition valve 16 (26) and then the degree of increase in temperature ΔTC of the oxidation catalyst 17 (27) in response to the output fuel supply command does not reflect the supplied fuel and when the electronic control unit 40 outputs a post injection command to the fuel injection valve 14 (24) and then the degree of increase in temperature ΔTC of the oxidation catalyst 17 (27) in response to the output post injection command reflects the supplied fuel at the time of abnormality diagnosis, it is diagnosed that the oxidation catalyst 17 (27) is normal and the fuel addition valve 16 (26) is abnormal (case 3). By so doing, when the oxidation catalyst 17 (27) is normal and the fuel addition valve 16 (26) is abnormal, it is possible to accurately diagnose this situation. Thus, it is possible to prevent erroneous diagnosis as to whether the oxidation catalyst 17 (27) and/or the fuel addition valve 16 (26) are abnormal.
(2) When the electronic control unit 40 outputs a fuel supply command to the fuel addition valve 16 (26) and then the degree of increase in temperature ΔTC of the oxidation catalyst 17 (27) in response to the output fuel supply command does not reflect the supplied fuel and when the degree of change in air-fuel ratio ΔA/F of exhaust gas in response to the fuel supply command reflects the supplied fuel at the time of abnormality diagnosis, it is diagnosed that the oxidation catalyst 17 (27) is abnormal and the fuel addition valve 16 (26) is normal (case 2). By so doing, when the oxidation catalyst 17 (27) is abnormal and the fuel addition valve 16 (26) is normal, it is possible to accurately diagnose this situation. Thus, it is possible to prevent erroneous diagnosis as to whether the oxidation catalyst 17 (27) and/or the fuel addition valve 16 (26) are abnormal.
(3) When the electronic control unit 40 outputs a fuel supply command to the fuel addition valve 16 (26) and then the degree of change in air-fuel ratio ΔA/F of exhaust gas in response to the output fuel supply command does not reflect the supplied fuel, and when the electronic control unit 40 outputs a post injection command to the fuel injection valve 14 (24) and the degree of increase in temperature ΔTC of the oxidation catalyst 17 (27) in response to the output post injection command does not reflect the supplied fuel at the time of abnormality diagnosis, it is diagnosed that both the oxidation catalyst 17 (27) and the fuel addition valve 16 (26) are abnormal (case 4). By so doing, when both the oxidation catalyst 17 (27) and the fuel addition valve 16 (26) are abnormal, it is possible to accurately diagnose this situation. Thus, it is possible to prevent erroneous diagnosis as to whether the oxidation catalyst 17 (27) and/or the fuel addition valve 16 (26) are abnormal.
(4) When the electronic control unit 40 outputs a fuel supply command to the fuel addition valve 16 (26) and then the degree of change in air-fuel ratio ΔA/F in response to the output fuel supply command does not reflect the supplied fuel at the time of abnormality diagnosis, the electronic control unit 40 stops outputting the fuel supply command to the fuel addition valve 16 (26), while the electronic control unit 40 outputs a post injection command to the fuel injection valves 14 (24) and then diagnoses whether the oxidation catalyst 17 (27) and/or the fuel addition valve 16 (26) are abnormal on the basis of the degree of increase in temperature ΔTC of the oxidation catalyst 17 (27) in response to the post injection command. In addition, when the degree of change in air-fuel ratio ΔA/F of exhaust gas in response to the fuel supply command output to the fuel addition valve 16 (26) reflects the supplied fuel, the electronic control unit 40 prohibits outputting the post injection command to the fuel injection valves 14 (24) in order to diagnose whether the oxidation catalyst 17 (27) and/or the fuel addition valve 16 (26) are abnormal. By so doing, it is possible to suppress deterioration in fuel consumption due to the fuel supplied by the fuel injection valves 14 (24).
(5) The electronic control unit 40 performs diagnosis on the predetermined cylinder bank 11 (21) one by one, and prohibits supplying fuel by the fuel addition valve 26 (16) other than the fuel addition valve 16 (26) of the predetermined cylinder bank 11 (21) when diagnosis is performed on the predetermined cylinder bank 11 (21). By so doing, when the abnormal fuel addition valve 16 (26) is present, it is possible to identify the abnormal fuel addition valve 16 (26).
(6) The electronic control unit 40 performs diagnosis as to whether the oxidation catalyst 17 (27) and/or the fuel addition valve 16 (26) are abnormal only immediately after start-up of the internal combustion engine 10. By so doing, it is possible to prevent a situation that PM trapped in the filter 31 cannot be desirably burned and removed because abnormality diagnosis is performed.

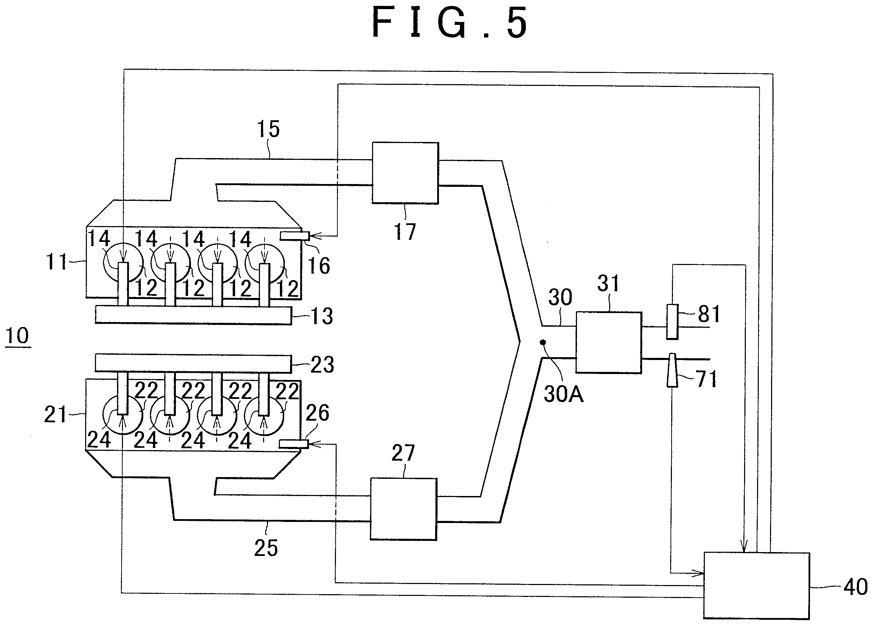

Next, a second embodiment of the invention will be described. FIG. 5 shows the schematic configuration of a controller for a V-type eight cylinder diesel engine. The controller shown in FIG. 5 is basically similar to the controller shown in FIG. 1 according to the first embodiment; however, the controller shown in FIG. 5 differs from the controller shown in FIG. 1 in that neither the upstream exhaust gas temperature sensors 51 and 61 nor the downstream exhaust gas temperature sensors 52 and 62 are arranged upstream and downstream of the oxidation catalysts 17 and 27, and an exhaust gas temperature sensor 81 is provided downstream of the filter 31. Then, the description of the same configuration is omitted.

In operation control over the fuel addition valves 16 and 26, when a predetermined execution condition is satisfied, the controller according to the second embodiment outputs a fuel supply command to the fuel addition valves 16 and 26 to thereby execute clogging prevention control. In the clogging prevention control, fluidity of fuel inside the fuel addition valves 16 and 26 is ensured to prevent fuel from clogging inside the fuel addition valves 16 and 26. The execution condition for the above clogging prevention control may, for example, include a condition that a coolant temperature is higher than or equal to a predetermined temperature, a condition that a predetermined period of time has elapsed from when the previous fuel supply command is output, and the like.

Incidentally, in the thus configured internal combustion engine 10, there is a possibility that it is difficult to desirably supply fuel to the oxidation catalysts 17 and 27 through the fuel addition valves 16 and 26 because of abnormality, such as degradation of the fuel addition valves 16 and 26. In this case, there occurs a problem that it is difficult to desirably increase the temperature of exhaust gas flowing into the filter 31, and it is difficult to desirably burn and remove PM trapped in the filter 31. Then, it is conceivable that abnormality diagnosis control is executed. In the abnormality diagnosis control, a fuel supply command is output to the fuel addition valves 16 and 26, the variation in air-fuel ratio ΔAF of exhaust gas in response to the output fuel supply command is detected by the air-fuel ratio sensor 71, and then it is diagnosed whether the fuel addition valves 16 and 26 are abnormal on the basis of the variation in air-fuel ratio to a rich side (hereinafter, "variation in air-fuel ratio") ΔAF. This focuses on the fact that, when a predetermined rate of fuel is not supplied when a fuel supply command for supplying the predetermined rate of fuel is output to the fuel addition valves 16 and 26, the variation in air-fuel ratio of exhaust gas to a rich side, detected by the air-fuel ratio sensor 71, is lower than that during normal times.

However, as in the case of the present embodiment, when the abnormality diagnosis control is applied to the internal combustion engine 10 equipped with the air-fuel ratio sensor 71 that is common to the two fuel addition valves 16 and 26 provided upstream of the air-fuel ratio sensor 71, the following problem occurs. That is, when it is diagnosed whether the fuel addition valves 16 and 26 are abnormal on the basis of the variation in air-fuel ratio ΔAF, it is impossible to recognize which one of the two fuel addition valves 16 and 26 is abnormal, so it is difficult to accurately perform abnormality diagnosis.

Then, in the present embodiment, the electronic control unit 40 outputs a fuel supply command to the fuel addition valve 16 (26) and then executes abnormality diagnosis control on the fuel addition valve 16 (26) one by one on the basis of the variation in air-fuel ratio ΔAF in response to the output fuel supply command. Specifically, when abnormality diagnosis control is executed on a predetermined one of the fuel addition valves 16 and 26, a fuel supply command is output to only the predetermined one of the fuel addition valves 16 and 26. By so doing, in the internal combustion engine 10 equipped with the air-fuel ratio sensor 71 common to the two fuel addition valves 16 and 26 provided upstream of the air-fuel ratio sensor 71, abnormality diagnosis control is accurately executed on the fuel addition valves 16 and 26.

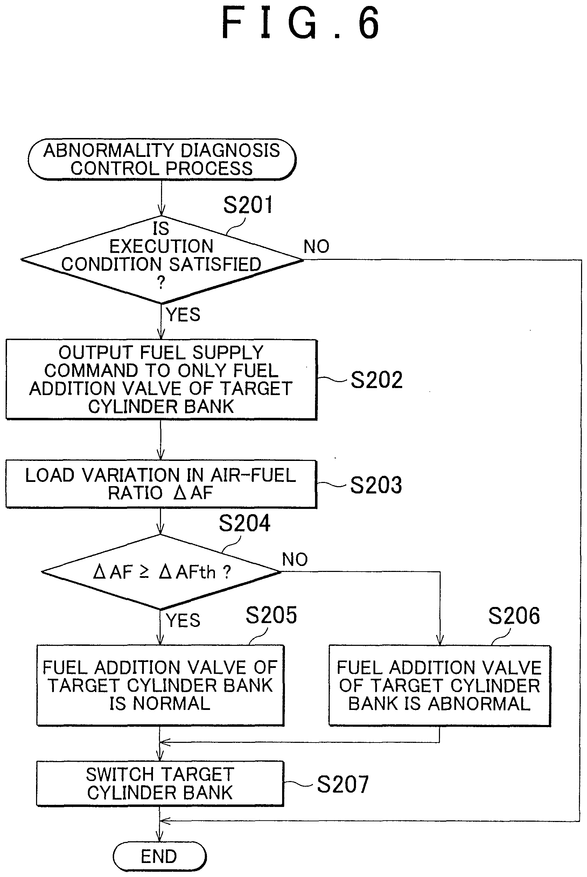

Next, the abnormality diagnosis control according to the present embodiment will be described with reference to FIG. 6. Note that FIG. 6 is a flowchart that shows the procedure of abnormality diagnosis control. A series of processes shown in the flowchart is repeatedly executed by the electronic control unit 40 during operation of the internal combustion engine 10.

As shown in FIG. 6, in this process, first, it is determined whether an abnormality diagnosis execution condition is satisfied (step S201). The execution condition here may include a condition that abnormality diagnosis on the two fuel addition valves 16 and 26 are not yet complete, a condition that the air-fuel ratio AF of exhaust gas detected by the air-fuel ratio sensor 71 is stable, a condition that the accumulation amount of PM is larger than or equal to a predetermined amount and a coolant temperature is higher than or equal to a predetermined temperature, that is, an initiation condition for filter recovery control is satisfied, a condition that a clogging prevention control execution condition is satisfied, and the like.

Then, in step S201, when the abnormality diagnosis execution condition is satisfied ("YES" in step S201), a fuel supply command is output to only the fuel addition valve 16 (26) of the cylinder bank 11 (21) subjected to abnormality diagnosis (step S202). By so doing, when the electronic control unit 40 executes abnormality diagnosis control on a predetermined one of the fuel addition valves 16 and 26, the electronic control unit 40 prohibits supplying fuel from the fuel addition valve 26 (16) other than the predetermined one of the fuel addition valves 16 and 26. Then, the variation in air-fuel ratio ΔAF of the cylinder bank 11 (21) subjected to abnormality diagnosis is loaded (step S203). Here, the absolute value of a difference between air-fuel ratios AF before and after the fuel supply command is output to the fuel addition valve 16 (26) is calculated as the variation in air-fuel ratio ΔAF. Note that, in the present embodiment, in consideration of a predetermined period of time required from when the fuel supply command is output to the fuel addition valve 16 (26) to when the air-fuel ratio AF varies, the process of step S203 is executed after the predetermined period of time has elapsed from when the process of step S202 is executed.

On the other hand, in step S201, when the abnormality diagnosis control execution condition is not satisfied ("NO" in step S201), the series of processes once ends. When the variation in air-fuel ratio ΔAF is thus loaded, it is subsequently determined whether the variation in air-fuel ratio ΔAF is higher than or equal to a predetermined value ΔAFth (step S204). Here, the predetermined value ΔAFth is a value that is empirically set in advance. Then, when the variation in air-fuel ratio ΔAF is higher than or equal to the predetermined value ΔAFth ("YES" in step S204), the variation in air-fuel ratio ΔAF of exhaust gas in response to the fuel supply command presumably reflects the supplied fuel, and then it is diagnosed that the fuel addition valve 16 (26) is normal (step S205).

On the other hand, in step S204, when the variation in air-fuel ratio ΔAF is not higher than or equal to the predetermined value ΔAFth ("NO" in step S204), the variation in air-fuel ratio ΔAF of exhaust gas in response to the fuel supply command presumably reflects the supplied fuel, and then it is diagnosed that the fuel addition valve 16 (26) is abnormal (step S206).

When abnormality diagnosis on the target cylinder bank 11 (21) is complete in step S205 or S206, the cylinder bank subjected to abnormality diagnosis is subsequently switched to the other cylinder bank 21 (11) (step S207), and then the series of processes once ends.

With the controller for an internal combustion engine according to the above described present embodiment, the following advantageous effects may be obtained. (1) The electronic control unit 40 outputs a fuel supply command to the fuel addition valve 16 (26) and then executes abnormality diagnosis control on the fuel addition valve 16 (26) one by one on the basis of the variation in air-fuel ratio ΔAF in response to the output fuel supply command. Specifically, when the electronic control unit 40 executes abnormality diagnosis control on a predetermined one of the fuel addition valves 16 and 26, the electronic control unit 40 outputs a fuel supply command to only the predetermined one of the fuel addition valves 16 and 26. That is, when the electronic control unit 40 executes abnormality diagnosis control on a predetermined one of the fuel addition valves 16 and 26, the electronic control unit 40 prohibits supplying fuel from the fuel addition valve 26 (16) other than the predetermined one of the fuel addition valves 16 and 26. By so doing, it is possible to accurately recognize the supply rate of the predetermined one of the fuel addition valves 16 and 26 on the basis of the variation in air-fuel ratio ΔAF of exhaust gas in response to the output fuel supply command. Thus, in the internal combustion engine 10 equipped with the air-fuel ratio sensor 71 common to the two fuel addition valves 16 and 26 provided upstream of the air-fuel ratio sensor 71, it is possible to accurately execute abnormality diagnosis control on the fuel addition valves 16 and 26.

(2) The electronic control unit 40 executes abnormality diagnosis control on the fuel addition valve 16 (26) instead of clogging prevention control when the clogging prevention control execution condition is satisfied. By so doing, in comparison with the configuration that abnormality diagnosis control on the fuel addition valve 16 (26) is executed at a timing different from the timing at which the clogging prevention control is executed, it is possible to suppress deterioration in fuel consumption.

### Third Embodiment

Hereinafter, a third embodiment of the controller for an internal combustion engine according to the aspect of the invention will be described focusing on the difference from the second embodiment.

In the configuration that, at the time when the electronic control unit 40 executes abnormality diagnosis control on the fuel addition valves 16 and 26, the electronic control unit 40 outputs a fuel supply command to only a predetermined one of the fuel addition valves 16 and 26, that is, the electronic control unit 40 prohibits supplying additive from the fuel addition valve 26 (16) other than a predetermined one of the fuel addition valves 16 and 26, there is no fuel supply from the other fuel addition valve 26 (16). Therefore, the temperature of exhaust gas flowing into the filter 31 decreases accordingly. As a result, there is a possibility that it is difficult to desirably burn and remove PM through filter recovery control.

Then, in the present embodiment, the electronic control unit 40 diagnoses whether the two fuel addition valves 16 and 26 as a whole are abnormal before the electronic control unit 40 executes abnormality diagnosis control on the fuel addition valve 16 (26) one by one. Here, the electronic control unit 40 outputs a command for supplying a predetermined rate of fuel to each of the two fuel addition valves 16 and 26 and then diagnoses that the two fuel addition valves 16 and 26 as a whole are not abnormal when the variation in air-fuel ratio ΔAF of exhaust gas in response to the output command is higher than or equal to a predetermined value ΔAFth2. On the other hand, the electronic control unit 40 diagnoses that at least one of the two fuel addition valves 16 and 26 is abnormal when the variation in air-fuel ratio ΔAF is not higher than or equal to the predetermined value ΔAFth2. Note that the predetermined value ΔAFth2 is empirically set in advance. Then, when it is diagnosed that at least one of the two fuel addition valves 16 and 26 is abnormal, the electronic control unit executes abnormality diagnosis control on the fuel addition valve 16 (26) one by one. On the other hand, when it is diagnosed that the two fuel addition valves 16 and 26 as a whole are not abnormal, the electronic control unit 40 prohibits executing abnormality diagnosis control on the fuel addition valve 16 (26) one by one. This can suppress a situation that it is difficult to desirably burn and remove PM accumulated in the filter 31 because of unnecessary execution of abnormality diagnosis control on the fuel addition valve 16 (26) one by one.

With the controller for an internal combustion engine according to the above described present embodiment, the following advantageous effects may be obtained. (1) The electronic control unit 40 outputs a fuel supply command to the two fuel addition valves 16 and 26 before the electronic control unit 40 executes abnormality diagnosis control on the fuel addition valve 16 (26) one by one, and the electronic control unit 40 diagnoses whether the two fuel addition valves 16 and 26 as a whole are abnormal on the basis of the variation in air-fuel ratio ΔAF in response to the output fuel supply command. Then, when it is diagnosed that the two fuel addition valves 16 and 26 as a whole are not abnormal, the electronic control unit 40 prohibits executing abnormality diagnosis control on the fuel addition valve 16 (26) one by one. By so doing, it is possible to prevent abnormality diagnosis control from being unnecessarily executed on the fuel addition valve 16 (26) one by one when it is not necessary to execute the abnormality diagnosis control on the fuel addition valve 16 (26) one by one. This suppresses a situation that it is difficult to desirably burn and remove PM accumulated in the filter 31 because of unnecessary execution of abnormality diagnosis control on the fuel addition valve 16 (26) one by one.

### Fourth Embodiment

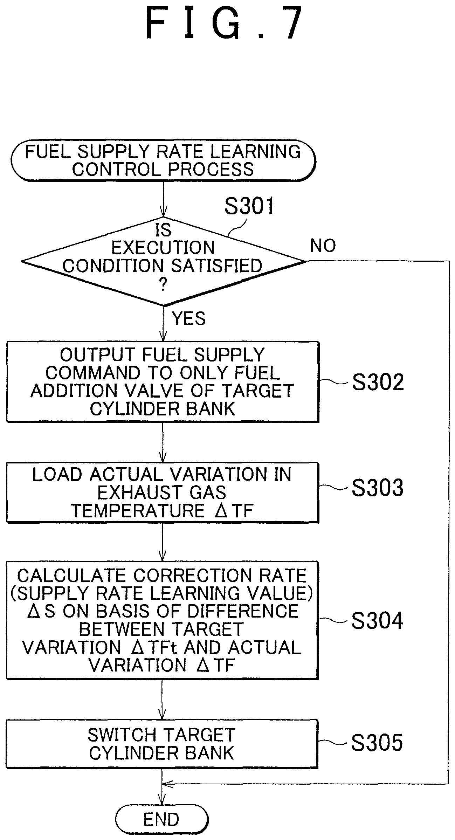

Hereinafter, a fourth embodiment of the controller for an internal combustion engine according to the aspect of the invention will be described with reference to FIG. 7 focusing on the difference from the second embodiment.

In the above described second embodiment, abnormality diagnosis control is executed on the fuel addition valve 16 (26) on the basis of the variation in air-fuel ratio ΔAF of exhaust gas detected by the air-fuel ratio sensor 71; whereas, in the present embodiment, supply rate learning control is executed on the fuel addition valve 16 (26) on the basis of the variation in exhaust gas temperature ΔTF, detected by the exhaust gas temperature sensor 81. Note that the configuration of the internal combustion engine 10 and the configuration of the electronic control unit 40 that controls the internal combustion engine 10 are the same as those shown in FIG. 5, so the overlap description is omitted.

As described above, in the internal combustion engine 10 according to the present embodiment, there is a case where it is difficult to desirably supply fuel through the fuel addition valves 16 and 26 because of abnormality, such as degradation of the fuel addition valve 16 or 26. In this case, there occurs a problem that it is difficult to desirably increase the temperature of exhaust gas flowing into the filter 31, and it is difficult to desirably burn and remove PM trapped in the filter 31. Then, it is conceivable that supply rate learning control is executed. In the supply rate learning control, a fuel supply command is output to the fuel addition valves 16 and 26, the variation in exhaust gas temperature ΔTF in response to the output fuel supply command is detected by the exhaust gas temperature sensor 81, and then supply rate learned values of the fuel addition valves 16 and 26 are set on the basis of the variation in temperature of exhaust gas to an increasing side (hereinafter, "supply rate learning control") ΔTF. This focuses on the fact that, when a command for supplying a predetermined rate of fuel is output to the fuel addition valves 16 and 26, the variation in temperature of exhaust gas to an increasing side ΔTF detected by the exhaust gas temperature sensor 81 decreases as the actual rate of fuel is smaller with respect to the predetermined rate. The supply rate learned values are set so as to eliminate a deviation between the actual rate of fuel supplied through the fuel addition valves 16 and 26 and the predetermined rate.

Incidentally, as in the case of the present embodiment, when the supply rate learning control is applied to the internal combustion engine 10 equipped with the exhaust gas temperature sensor 81 that is common to the two fuel addition valves 16 and 26 provided upstream of the exhaust gas temperature sensor 81, the following problem occurs. That is, when the supply rate learned values of the fuel addition valves 16 and 26 are set on the basis of the variation in exhaust gas temperature ΔTF, it is impossible to accurately set the supply rate learned values because it is impossible to recognize a deviation between the rate of fuel actually supplied and the predetermined rate for each of the fuel addition valves 16 and 26.

Then, in the present embodiment, the electronic control unit 40 outputs a fuel supply command to the fuel addition valve 16 (26) and then executes supply rate learning control on the fuel addition valve 16 (26) one by one on the basis of the variation in exhaust gas temperature ΔTF in response to the output fuel supply command. Specifically, when the electronic control unit 40 executes supply rate learning control on a predetermined one of the fuel addition valves 16 and 26, the electronic control unit 40 outputs a fuel supply command to only the predetermined one of the fuel addition valves 16 and 26. Specifically, as the variation in exhaust gas temperature ΔTF gets smaller with respect to a target variation assumed in a state where the fuel addition valves 16 and 26 are normal, the supply rate learned values are set as larger values. Thus, the control values of the fuel addition valves 16 and 26 are set as larger values to thereby compensate for the shortage of fuel supplied from the fuel addition valve 16 (26). By so doing, in the internal combustion engine 10 equipped with the exhaust gas temperature sensor 81 common to the two fuel addition valves 16 and 26 provided upstream of the exhaust gas temperature sensor 81, the supply rate learning control on the fuel addition valves 16 and 26 is accurately executed.

Next, the supply rate learning control according to the present embodiment will be described with reference to FIG. 7. Note that FIG. 7 is a flowchart that shows the procedure of the supply rate learning control. A series of processes shown in the flowcharts is repeatedly executed by the electronic control unit 40 during operation of the internal combustion engine 10.

As shown in FIG. 7, in this process, first, it is determined whether a supply rate learning control execution condition is satisfied (step S301). The execution condition here may include a condition that supply rate learning on the two fuel addition valves 16 and 26 is not yet complete, a condition that the exhaust gas temperature TF detected by the exhaust gas temperature sensor 81 is stable, a condition that the accumulation amount of PM is larger than or equal to a predetermined amount and a coolant temperature is higher than or equal to a predetermined temperature, that is, an initiation condition for filter recovery control is satisfied, and the like.

Then, in step S301, when the supply rate learning control execution condition is satisfied ("YES" in step S301), a fuel supply command is output to only the fuel addition valve 16 (26) of the cylinder bank 11 (21) subjected to supply rate learning (step S302). By so doing, when the electronic control unit 40 executes supply rate learning control on a predetermined one of the fuel addition valves 16 and 26, the electronic control unit 40 prohibits supplying fuel from the fuel addition valve 26 (16) other than the predetermined one of the fuel addition valves 16 and 26. Then, the actual variation in exhaust gas temperature ΔTF of the cylinder bank 11 (21) subjected to supply rate learning is loaded (step S303). Here, the absolute value of a difference between exhaust gas temperatures TF before and after the fuel supply command is output to the fuel addition valve 16 (26) is calculated as the actual variation in exhaust gas temperature ΔTF. Note that, in the present embodiment, in consideration of a predetermined period of time required from when the fuel supply command is output to the fuel addition valve 16 (26) to when the exhaust gas temperature TF varies, the process of step S303 is executed after the predetermined period of time has elapsed from when the process of step S302 is executed.

On the other hand, in step S301, when the supply rate learning control execution condition is not satisfied ("NO" in step S301), the series of processes once ends. When the actual variation in exhaust gas temperature ΔTF is loaded in this way, a supply rate learned value ΔS is subsequently set on the basis of the difference between the target variation in exhaust gas temperature ΔTFt and the actual variation in exhaust gas temperature ΔTF (step S304). Here, the target variation in exhaust gas temperature ΔTFt is the variation in exhaust gas temperature assumed in a state where the fuel addition valve 16 (26) is normal, and is a value that is empirically set in advance. Then, as the difference between the target variation in exhaust gas temperature ΔTFt and the actual variation in exhaust gas temperature ΔTF increases, the supply rate learned value ΔS is set as a larger value.

When setting of the supply rate learned value ΔS for the target cylinder bank 11 (21) is complete, the cylinder bank subjected to supply rate learning is switched to the other cylinder bank 21 (11) (step S305), and then the series of processes once ends.

With the controller for an internal combustion engine according to the above described present embodiment, the following advantageous effects may be obtained.
(1) The electronic control unit 40 outputs a fuel supply command to the fuel addition valve 16 (26) and then executes supply rate learning control on the fuel addition valve 16 (26) one by one on the basis of the variation in exhaust gas temperature ΔTF in response to the output fuel supply command. Specifically, when the electronic control unit 40 executes supply rate learning control on a predetermined one of the fuel addition valves 16 and 26, the electronic control unit 40 outputs the fuel supply command to only the predetermined one of the fuel addition valves 16 and 26. That is, when the electronic control unit 40 executes fuel supply rate learning control on a predetermined one of the fuel addition valves 16 and 26, the electronic control unit 40 prohibits supplying fuel from the fuel addition valve 26 (16) other than the predetermined one of the fuel addition valves 16 and 26. By so doing, it is possible to accurately recognize the state of fuel supplied from the predetermined one of the fuel addition valves 16 and 26 on the basis of the variation in exhaust gas temperature ΔTF in response to the output fuel supply command. Thus, in the internal combustion engine 10 equipped with the exhaust gas temperature sensor 81 common to the two fuel addition valves 16 and 26 provided upstream of the exhaust gas temperature sensor 81, it is possible to accurately execute the supply rate learning control on the fuel addition valves 16 and 26.

Note that the controller for an internal combustion engine according to the aspect of the invention is not limited to the configurations illustrated in the above embodiments; it may be implemented, for example, as the following alternative embodiments that are appropriately modified from the above described embodiments.
In the above embodiments, the degree of increase in temperature ΔTC of the oxidation catalyst 17 (27) is detected on the basis of the result detected by the downstream exhaust gas temperature sensor 52 (62); however, temperature increase detecting means according to the aspect of the invention is not limited to this configuration. Instead, for example, the degree of increase in temperature ΔTC of the oxidation catalyst 17 (27) may be detected on the basis of not only the result detected by the downstream exhaust gas temperature sensor 52 (62) but also the result detected by the upstream exhaust gas temperature sensor 51 (61). Alternatively, a sensor that directly detects the temperature of the oxidation catalyst 17 (27) may be provided.

In the above embodiments, abnormality diagnosis is performed only immediately after start-up of the internal combustion engine 10; however, the timing at which diagnosis is performed by the diagnostic means according to the aspect of the invention is not limited to this timing. Instead, for example, diagnosis may be performed only when the temperature Tgout of exhaust gas flowing out from the oxidation catalyst 17 (27) is higher than or equal to a predetermined temperature. By so doing, abnormality diagnosis is performed when the temperature of exhaust gas flowing into the filter 31 is relatively high. This prevents a situation that PM trapped in the filter 31 cannot be desirably burned and removed because abnormality diagnosis is performed. In addition, means for detecting the temperature of exhaust gas flowing into the filter 31 is not limited to the one that uses the result detected by the downstream exhaust gas temperature sensor 52 (62). As long as the exhaust gas temperature detecting means detects the temperature of exhaust gas flowing into the filter 31, the configuration of the exhaust gas temperature detecting means may be changed optionally.

In the above embodiments, the V-type internal combustion engine 10 is illustrated; however, the internal combustion engine according to the aspect of the invention is not limited to this configuration. Instead, for example, the internal combustion engine according to the aspect of the invention may be of a horizontally opposed type. In addition, the internal combustion engine according to the aspect of the invention is not limited to the one that includes two cylinder banks 11 and 21; instead, for example, it may be a W-type internal combustion engine that includes four cylinder banks. In this case as well, the above described embodiments may be utilized as long as the internal combustion engine is configured so that an exhaust passage is provided for each of the cylinder banks, the exhaust passages are collected at a collecting portion downstream of the exhaust passages, both an oxidation catalyst and a fuel addition valve are provided for each of the cylinder banks and air-fuel ratio detecting means is provided downstream of the collecting portion.

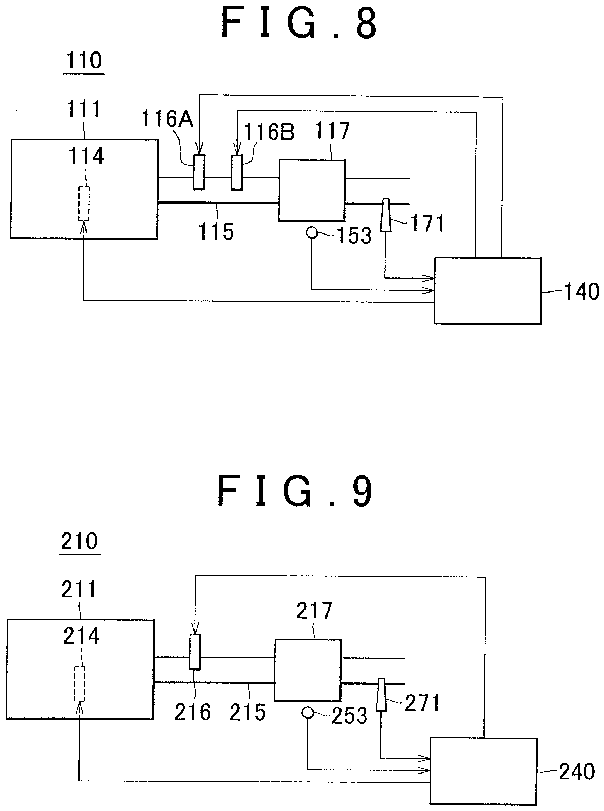

In the above embodiments, the internal combustion engine that includes a plurality of cylinder banks is illustrated; however, the internal combustion engine according to the aspect of the invention is not limited to this configuration. Instead, for example, as in the case of a first alternative embodiment to the first embodiment shown in FIG. 8, the aspect of the invention may also be applied to an internal combustion engine 110 that includes only one cylinder bank 111. In an exhaust passage 115 of the cylinder bank 111, a first fuel addition valve 116A, a second fuel addition valve 116B, an oxidation catalyst 117 and an air-fuel ratio sensor 171 are provided in order from the upstream side. In addition, a temperature sensor 153 for detecting the degree of increase in temperature ΔTC of the oxidation catalyst 117 is provided. In this case as well, when the electronic control unit 140 performs abnormality diagnosis on the fuel addition valve 116A (116B) one by one and then performs diagnosis on a predetermined one of the fuel addition valves 116A and 116B, it is only necessary that the electronic control unit 140 prohibits supplying fuel by the fuel addition valve 116B (116A) other than the predetermined one of the fuel addition valves 116A and 116B. Here, when a fuel supply command is output to the predetermined one of the fuel addition valves 116A and 116B and then the degree of change in air-fuel ratio ΔA/F of exhaust gas in response to the output fuel supply command reflects the supplied fuel, at least the predetermined one of the fuel addition valves 116A and 116B is presumably normal. Thus, when the abnormal fuel addition valve 116A (116B) is present, the abnormal fuel addition valve may be identified.

In the above embodiments, the internal combustion engine that includes a plurality of fuel addition valves is illustrated; however, the internal combustion engine according to the aspect of the invention is not limited to this configuration. Instead, for example, as in the case of a second alternative embodiment to the first embodiment shown in FIG. 9, only one fuel addition valve 216 may be provided in an exhaust passage 215.

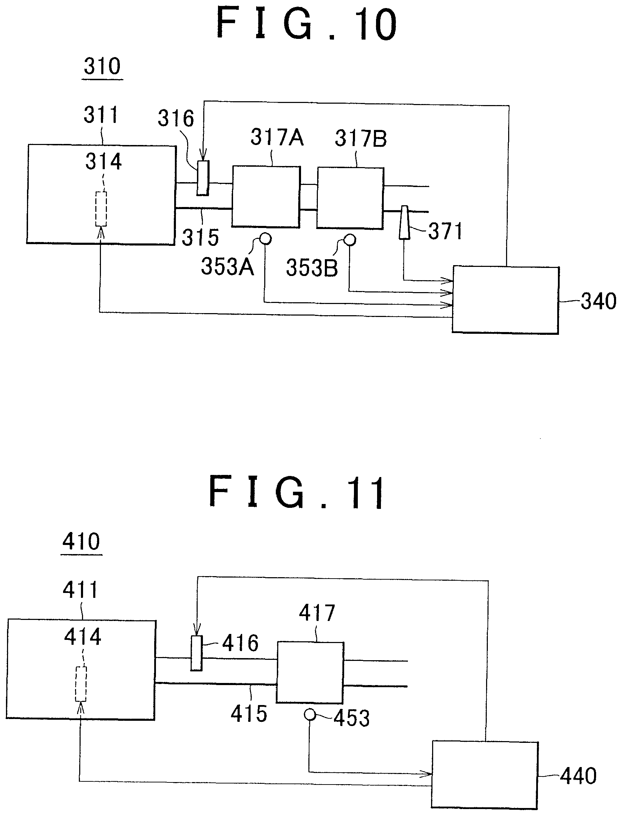

In the above embodiments, the internal combustion engine that includes only one oxidation catalyst in the exhaust passage between the fuel addition valve and the air-fuel ratio sensor is illustrated. Instead, for example, as in the case of a third alternative embodiment to the first embodiment shown in FIG. 10, two oxidation catalysts 317A and 317B may be provided in an exhaust passage 315 between a fuel addition valve 316 and an air-fuel ratio sensor 371. In this case, it is only necessary that a temperature sensor 353A for detecting the degree of increase in temperature ΔTC of the oxidation catalyst 317A and a temperature sensor 353B for detecting the degree of increase in temperature ΔTC of the oxidation catalyst 317B are provided.

In the above embodiments, at the time of abnormality diagnosis, a fuel supply command is initially output to the fuel addition valve and, after that, a post injection command is output to the fuel injection valves. Instead, it is also applicable that a post injection command is initially output to the fuel injection valves and, after that, a fuel supply command is output to the fuel addition valve.

In the above embodiments, the controller that includes the air-fuel ratio sensor is illustrated; however, the air-fuel ratio sensor is not an indispensable component of the controller for an internal combustion engine according to the aspect of the invention. That is, as in the case of a fourth alternative embodiment to the first embodiment shown in FIG. 11, a fuel addition valve 416 and an oxidation catalyst 417 are provided in an exhaust passage 415 of an internal combustion engine 410 in order from the upstream side. In addition, a temperature sensor 453 for detecting the degree of increase in temperature ΔTC of the oxidation catalyst 417 is provided. However, the air-fuel ratio sensor (air-fuel ratio detecting means) is omitted. In this case as well, when an electronic control unit 440 outputs a fuel supply command to the fuel addition valve 416 and then the degree of increase in temperature ΔTC of the oxidation catalyst 417 in response to the output fuel supply command does not reflect the supplied fuel, at least one of the fuel addition valve 416 and the oxidation catalyst 417 is presumably abnormal (in FIG. 2, the cases 2, 3 and 4 are applicable). In addition, when the electronic control unit 440 outputs a post injection command to a fuel injection valve 414 and then the degree of increase in temperature ΔTC of the oxidation catalyst 417 in response to the output post injection command reflects the supplied fuel, at least the oxidation catalyst 417 is presumably normal (in FIG. 2, the cases 1 and 3 are applicable). From the above, when a fuel supply command is output to the fuel addition valve 416 and then the degree of increase in temperature ΔTC of the oxidation catalyst 417 in response to the output fuel supply command does not reflect the supplied fuel, and when a post injection command is output to the fuel injection valve 414 and then the degree of increase in temperature ΔTC of the oxidation catalyst 417 in response to the output post injection command reflects the supplied fuel, it may be diagnosed that the oxidation catalyst 417 is normal and the fuel addition valve 416 is abnormal (in FIG. 2, the case 3).

In short, the electronic control unit includes a fuel injection valve that injects fuel into a cylinder at a timing that does not contribute to combustion of an internal combustion engine to supply unburned fuel to an oxidation catalyst, temperature increase detecting means that detects an increase in temperature of the oxidation catalyst in response to fuel supplied by a fuel addition valve or the fuel injection valve, and diagnostic means that diagnoses whether the oxidation catalyst and/or the fuel addition valve are abnormal, and it is only necessary that the diagnostic means diagnoses that the oxidation catalyst is normal and the fuel addition valve is abnormal when a fuel supply command is output to the fuel addition valve and then the degree of increase in temperature of the oxidation catalyst in response to the output fuel supply command does not reflect the supplied fuel and when a fuel supply command is output to the fuel injection valve and the degree of increase in temperature of the oxidation catalyst in response to the output fuel supply command reflects the supplied fuel at the time of the diagnosis.

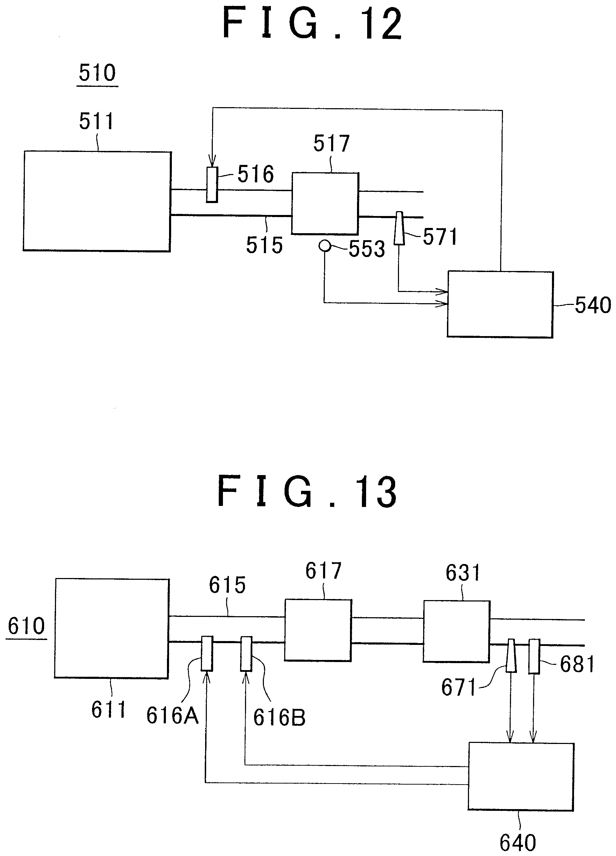

In the above embodiments, the fuel injection valve that injects fuel into a cylinder a t a timing, at which the injected fuel does not contribute to combustion of the internal combustion engine, to supply unburned fuel to the oxidation catalyst, that is, the fuel injection valve that executes post injection, is illustrated; however, the fuel injection valve is not an indispensable component of the controller for an internal combustion engine according to the aspect of the invention. That is, as in the case of a fifth alternative embodiment to the first embodiment shown in FIG. 12, a fuel addition valve 516, an oxidation catalyst 517 and an air-fuel ratio sensor 571 are provided in an exhaust passage 515 of an internal combustion engine 510 in order from the upstream side. In addition, a temperature sensor 553 for detecting the degree of increase in temperature ΔTC of the oxidation catalyst 517 is provided. However, the fuel injection valve for post injection is omitted. In this case as well, when an electronic control unit 540 outputs a fuel supply command to the fuel addition valve 516 and the degree of increase in temperature ΔTC of the oxidation catalyst 517 in response to the output fuel supply command does not reflect the supplied fuel, at least one of the fuel addition valve 516 and the oxidation catalyst 517 is presumably abnormal (in FIG. 6, the cases 2, 3 and 4 are applicable). In addition, when the degree of change in air-fuel ratio ΔA/F of exhaust gas in response to the output fuel supply command reflects the supplied fuel, at least the fuel addition valve 516 is presumably normal (in FIG. 6, the cases 1 and 2 are applicable). From the above, when a fuel supply command is output to the fuel addition valve 516 and then the degree of increase in temperature ΔTC of the oxidation catalyst 517 in response to the output fuel supply command does not reflect the supplied fuel and when the degree of change in air-fuel ratio ΔA/F of exhaust gas in response to the output fuel supply command reflects the supplied fuel, it may be diagnosed that the oxidation catalyst 517 is abnormal and the fuel addition valve 516 is normal.

In short, the electronic control unit includes temperature increase detecting means that detects an increase in temperature of an oxidation catalyst in response to fuel supplied by a fuel addition valve, air-fuel ratio detecting means that detects the air-fuel ratio of exhaust gas provided downstream of the oxidation catalyst in an exhaust passage, and diagnostic means that diagnoses whether the oxidation catalyst and/or the fuel addition valve are abnormal, and it is only necessary that the diagnostic means diagnoses that the oxidation catalyst is abnormal and the fuel addition valve is normal when a fuel supply command is output to the fuel addition valve and then the degree of increase in temperature of the oxidation catalyst in response to the output fuel supply command does not reflect the supplied fuel and when the degree of change in air-fuel ratio of exhaust gas in response to the output fuel supply command reflects the supplied fuel at the time of the diagnosis.

In addition, the controller for an internal combustion engine according to the aspect of the invention is not limited to the configurations illustrated in the second to fourth embodiments; it may be implemented, for example, as the following alternative embodiments that are appropriately modified from these embodiments.
As in the case of the first embodiment, it is desirable to execute abnormality diagnosis control on the fuel addition valve 16 (26) instead of clogging prevention control when the clogging prevention control execution condition is satisfied in terms of suppressing deterioration in fuel consumption. However, if the deterioration in fuel consumption is ignorable, the abnormality diagnosis control may be executed when the clogging prevention control execution condition is not satisfied.

In the above embodiments, the filter 31 that has the function of trapping PM contained in exhaust gas is illustrated; instead, it is also applicable that the filter 31 supports a NOx occlusion reduction catalyst that occludes nitrogen oxides (NOx) contained in exhaust gas.

In the above embodiments, the V-type eight cylinder internal combustion engine is illustrated; however, the number of cylinders of the internal combustion engine according to the aspect of the invention is not limited to eight. Instead, for example, the number of cylinders may be six or below or may be ten or above. In addition, the internal combustion engine is not limited to a V-type one; instead, for example, it may be of a horizontally opposed type.

In the above embodiments, the oxidation catalysts 17 and 27 are respectively provided for the first exhaust pipe 15 and the second exhaust pipe 25; however, the arrangement of catalysts according to the aspect of the invention is not limited to this arrangement. Instead, for example, it is also applicable that only one oxidation catalyst is provided upstream of the filter 31 in the third exhaust pipe 30. In the above configuration as well, by applying the aspect of the invention, it is possible to obtain the advantageous effects similar to those of the above embodiments.

In the above embodiments, the internal combustion engine 10 that includes two cylinder banks 11 and 21 is illustrated; however, the internal combustion engine according to the aspect of the invention is not limited to the internal combustion engine 10. Instead, for example, the internal combustion engine may include four cylinder banks. In addition, as shown in FIG. 13, the internal combustion engine may be an internal combustion engine 610 that includes only one cylinder bank 611. Specifically, as shown in the drawing, two fuel addition valves 616A and 616B are provided upstream of a catalyst 617 in an exhaust passage 615. In addition, a filter 631 is provided downstream of the catalyst 617 in the exhaust passage 615, and an exhaust gas temperature sensor 651 that detects the exhaust gas temperature TF and an air-fuel ratio sensor 671 that detects the air-fuel ratio AF of exhaust gas are provided downstream of the filter 631. In this case as well, the exhaust gas temperature sensor 651 is provided common to the two fuel addition valves 616A and 616B provided upstream of the exhaust gas temperature sensor 651. In addition, the air-fuel ratio sensor 671 is provided common to the two fuel addition valves 616A and 616B provided upstream of the air-fuel ratio sensor 671.

In the above embodiments, abnormality diagnosis control or supply rate learning control is executed on the fuel addition valve 16, 26, 616A or 616B on the basis of the results detected by the exhaust gas temperature sensor 81 or 681 and the air-fuel ratio sensor 71 or 671 that are provided downstream of the filter 31 or 631. However, the arrangement location of the exhaust gas temperature detecting means according to the aspect of the invention is not limited to this location; instead, for example, the arrangement location may be a portion upstream of the filter 31 as long as it is downstream of the catalyst in the exhaust passage. In addition, the arrangement location of the air-fuel ratio detecting means according to the aspect of the invention is not limited to this location; instead, for example, the arrangement location may be a portion upstream of the filter 31 as long as it is downstream of the catalyst in the exhaust passage.

As in the case of the third embodiment, it is desirable to prohibit executing abnormality diagnosis control on the fuel addition valves 16 and 26 one by one when it is diagnosed whether the two fuel addition valves 16 and 26 as a whole are abnormal before abnormality diagnosis control is executed on the fuel addition valves 16 and 26 one by one and then it is diagnosed that the two fuel addition valves 16 and 26 as a whole are not abnormal, in terms of preventing a situation that it is difficult to desirably burn and remove PM trapped in the filter 31 because of unnecessary execution of abnormality diagnosis control on the fuel addition valves 16 and 26 one by one. However, when the above problem is ignorable, the above described process of diagnosing whether the two fuel addition valves 16 and 26 as a whole are abnormal may be omitted.

In the above embodiments, the configuration that fuel for the internal combustion engine 10 is supplied through the fuel addition valves 16 and 26 is illustrated; however, additive supplied by the addition valve according to the aspect of the invention is not limited to the fuel. Instead, for example, the additive may be a hydrocarbon material different from the fuel for the internal combustion engine 10. In short, the additive may be the one that is able to increase the temperature of exhaust gas through the catalyst or the one that is able to change the air-fuel ratio of exhaust gas.

In the second and third embodiments, the configuration that an additive supply command is output to the addition valves and then abnormality diagnosis control is executed on the addition valves one by one on the basis of the degree of change in exhaust gas temperature in response to the output additive supply command is illustrated. Instead or in addition to this configuration, supply rate learning control may be executed on the addition valves one by one on the basis of the degree of change in exhaust gas temperature in response to the output additive supply command.

In the fourth embodiment, the configuration that an additive supply command is output to the addition valves and then additive supply rate learning control is executed on the addition valves one by one on the basis of the degree of change in air-fuel ratio in response to the output additive supply command is illustrated. Instead or in addition to this configuration, abnormality diagnosis control may be executed on the addition valves one by one on the basis of the degree of change in air-fuel ratio in response to the output additive supply command.

## Claims

1. A controller for an internal combustion engine that includes a catalyst (17, 27; 117; 217; 317A, 317B; 417; 517) that is provided in an exhaust passage (15, 25; 115; 215; 315; 415; 515), a fuel addition valve (16, 26; 116A, 116B; 216; 316; 416; 516) that is provided upstream of the catalyst in the exhaust passage and configured to supply fuel to the catalyst, a fuel injection valve (14, 24; 114; 214; 314; 414) configured to inject fuel into a cylinder, temperature increase detecting means (51, 52; 61, 62; 153; 253; 353A, 353B; 453; 553) configured to detect an increase in temperature of the catalyst, and air-fuel ratio detecting means (71, 171, 271, 371, 471, 571) that is provided downstream of the catalyst in the exhaust passage and that is configured to detect the air-fuel ratio of exhaust gas,
the controller being configured so that:
the fuel injection valve (14, 24; 114; 214; 314; 414) injects fuel into a cylinder at a timing at which the fuel does not contribute to combustion of the internal combustion engine to thereby supply unburned fuel to the catalyst;
the temperature increase detecting means (51, 52; 61, 62; 153; 253; 353A, 353B; 453; 553) detects an increase in temperature of the catalyst in response to fuel supplied by the fuel addition valve or the fuel injection valve; and
the controller comprising diagnostic means (40, 140, 240, 340, 440, 540) that is configured to diagnose whether the catalyst and/or the fuel addition valve are abnormal on the basis of whether the degree of increase in temperature of the catalyst in response to a fuel supply command for supplying fuel, which is output to the fuel addition valve by the diagnostic means, reflects the supplied fuel and whether the degree of increase in temperature of the catalyst in response to a fuel supply command for supplying fuel, which is output to the fuel injection valve by the diagnostic means, reflects the supplied fuel at the time of the diagnosis, wherein
the diagnostic means is configured to diagnose that the catalyst is normal and the fuel addition valve is abnormal when the degree of increase in temperature of the catalyst in response to a fuel supply command for supplying fuel, which is output to the fuel addition valve by the diagnostic means, does not reflect the supplied fuel and when the degree of increase in temperature of the catalyst in response to a fuel supply command for supplying fuel, which is output to the fuel injection valve by the diagnostic means, reflects the supplied fuel at the time of the diagnosis;
the controller for an internal combustion engine being **characterized in that** the diagnostic means is further configured to diagnose that the catalyst is abnormal and the fuel addition valve is normal when the degree of increase in temperature of the catalyst in response to a fuel supply command for supplying fuel, which is output to the fuel addition valve by the diagnostic means, does not reflect the supplied fuel and when the degree of change in air-fuel ratio of the exhaust gas in response to the output fuel supply command reflects the supplied fuel at the time of the diagnosis.

2. The controller for an internal combustion engine according to claim 1, wherein
the diagnostic means is configured to diagnose that both the catalyst and the fuel addition valve are abnormal when the degree of change in air-fuel ratio of the exhaust gas in response to a fuel supply command for supplying fuel, which is output to the fuel addition valve by the diagnostic means, does not reflect the supplied fuel and when the degree of increase in temperature of the catalyst in response to a fuel supply command for supplying fuel, which is output to the fuel injection valve by the diagnostic means, does not reflect the supplied fuel at the time of the diagnosis.

3. The controller for an internal combustion engine according to claim 1 or 2, wherein
the diagnostic means is configured to diagnose that both the catalyst and the fuel addition valve are normal when the degree of increase in temperature of the catalyst in response to a fuel supply command for supplying fuel, which is output to the fuel addition valve by the diagnostic means, reflects the supplied fuel at the time of the diagnosis.

4. The controller for an internal combustion engine according to any one of claims 1 through 3, wherein
when the degree of change in air-fuel ratio of the exhaust gas in response to a fuel supply command for supplying fuel, which is output to the fuel addition valve by the diagnostic means, does not reflect the supplied fuel at the time of the diagnosis, the diagnostic means is configured to diagnose whether the catalyst and/or the fuel addition valve are abnormal on the basis of the degree of increase in temperature of the catalyst in response to a fuel supply command for supplying fuel, which is output to the fuel injection valve by the diagnostic means, while stopping outputting a fuel supply command for supplying fuel to the fuel addition valve.

5. The controller for an internal combustion engine according to any one of claims 1 through 4, wherein
the diagnostic means is configured to, when the degree of change in air-fuel ratio of the exhaust gas in response to the fuel supply command output to the fuel addition valve reflects the supplied fuel, prohibit outputting the fuel supply command to the fuel injection valve in order to diagnose whether the catalyst and/or the fuel addition valve are abnormal.

6. The controller for an internal combustion engine according to any one of claims 1 through 5, wherein
a plurality of the fuel addition valves (16, 26; 116A, 116B) are provided upstream of the air-fuel ratio detecting means (71, 171), the diagnostic means (40, 140) is configured to perform the diagnosis on the fuel addition valves one by one, and, when the diagnostic means performs diagnosis on a predetermined one of the fuel addition valves, the diagnostic means is configured to prohibit supplying fuel by the fuel addition valve(s) other than the predetermined one of the fuel addition valves.

7. The controller for an internal combustion engine according to any one of claims 1 through 6, wherein
the internal combustion engine (10) includes a plurality of cylinder banks, the exhaust passage (15, 25) is provided for each of the cylinder banks (11, 21), the exhaust passages are collected at a collecting portion downstream of the exhaust passages, the catalyst (17, 27) and the fuel addition valve (16, 26) both are provided for each of the cylinder banks, and the air-fuel ratio detecting means (71) is provided downstream of the collecting portion.

8. The controller for an internal combustion engine according to any one of claims 1 through 7, wherein
a filter (31) is provided in the exhaust passages (15, 25) downstream of a collecting portion, and traps particulate matter contained in exhaust gas.

9. The controller for an internal combustion engine according to any one of claims 1 through 8, wherein
the diagnostic means (40) is configured to perform the diagnosis only immediately after start-up of the internal combustion engine.

10. The controller for an internal combustion engine according to claim 8, further comprising:
exhaust gas temperature detecting means that is configured to detect the temperature of exhaust gas flowing into the filter, wherein
the diagnostic means is configured to perform the diagnosis only when the temperature of exhaust gas detected by the exhaust gas temperature detecting means is higher than or equal to a predetermined temperature.

11. The controller for an internal combustion engine according to any one of claims 1 through 10, wherein
the temperature increase detecting means has a downstream exhaust gas temperature sensor that detects the temperature of exhaust gas flowing from the catalyst, and is configured to detect the degree of increase in temperature of the catalyst on the basis of the temperature of exhaust gas, detected by the downstream exhaust gas temperature sensor.

## Patentansprüche

1. Steuerung für einen Verbrennungsmotor, der einen Katalysator (17, 27; 117; 217; 317A, 317B; 417; 517), der in einem Auslasskanal (15, 25; 115; 215; 315; 415; 515) vorgesehen ist, ein Kraftstoffzugabeventil (16, 26; 116A, 116B; 216; 316; 416; 516), das stromaufwärts des Katalysators in dem Auslasskanal vorgesehen und dazu ausgebildet ist, dem Katalysator Kraftstoff zuzuführen, ein Kraftstoffeinspritzventil (14, 24; 114; 214; 314; 414), das dazu ausgebildet ist, Kraftstoff in einen Zylinder einzuspritzen, ein Temperaturanstiegsdetektiermittel (51, 52; 61, 62; 153; 253; 353A, 353B; 453; 553), das dazu ausgebildet ist, einen Anstieg der Temperatur des Katalysators zu detektieren, und ein Luft-Kraftstoff-Verhältnis-Detektiermittel (71, 171, 271, 371, 471, 571), das stromabwärts des Katalysators in dem Auslasskanal vorgesehen und dazu ausgebildet ist, das Luft-Kraftstoff-Verhältnis von Abgas zu detektieren, umfasst,
wobei die Steuerung derart ausgebildet ist, dass:
das Kraftstoffeinspritzventil (14, 24; 114; 214; 314; 414) Kraftstoff in einen Zylinder zu Zeitpunkten einspritzt, zu denen der Kraftstoff nicht zur Verbrennung des Verbrennungsmotors beiträgt, um dadurch dem Katalysator unverbrannten Kraftstoff zuzuführen,
das Temperaturanstiegsdetektiermittel (51, 52; 61, 62; 153; 253; 353A, 353B; 453; 553) einen Anstieg der Temperatur des Katalysators als Reaktion auf Kraftstoff, der durch das Kraftstoffzugabeventil oder das Kraftstoffeinspritzventil zugeführt wird, detektiert und
die Steuerung ein Diagnosemittel (40, 140, 240, 340, 440, 540) umfasst, das dazu ausgebildet ist, zu diagnostizieren, ob der Katalysator und/oder das Kraftstoffzugabeventil abnormal sind, basierend darauf, ob, zur Zeit der Diagnose, das Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffzugabeventil ausgegeben wird, den zugeführten Kraftstoff widerspiegelt und ob das Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffeinspritzventil ausgegeben wird, den zugeführten Kraftstoff widerspiegelt, wobei
das Diagnosemittel dazu ausgebildet ist, zu diagnostizieren, dass der Katalysator normal ist und das Kraftstoffzugabeventil abnormal ist, wenn, zur Zeit der Diagnose, das Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffzugabeventil ausgegeben wird, nicht den zugeführten Kraftstoff widerspiegelt und wenn das Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffeinspritzventil ausgegeben wird, den zugeführten Kraftstoff widerspiegelt,
wobei die Steuerung für einen Verbrennungsmotor **dadurch gekennzeichnet ist, dass** das Diagnosemittel ferner dazu ausgebildet ist, zu diagnostizieren, dass der Katalysator abnormal ist und das Kraftstoffzugabeventil normal ist, wenn, zur Zeit der Diagnose, das Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffzugabeventil ausgegeben wird, nicht den zugeführten Kraftstoff widerspiegelt und wenn das Ausmaß der Änderung des Luft-Kraftstoff-Verhältnisses des Abgases als Reaktion auf den ausgegebenen Kraftstoffzufuhrbefehl den zugeführten Kraftstoff widerspiegelt.

2. Steuerung für einen Verbrennungsmotor nach Anspruch 1, wobei
das Diagnosemittel dazu ausgebildet ist, zu diagnostizieren, dass sowohl der Katalysator als auch das Kraftstoffzugabeventil abnormal sind, wenn, zur Zeit der Diagnose, das Ausmaß der Änderung des Luft-Kraftstoff-Verhältnisses des Abgases als Reaktion auf einen Kraftstoffzufuhrbefehl zum Zuführen von Kraftstoff, der durch das Diagnosemittel zu dem Kraftstoffzugabeventil ausgegeben wird, nicht den zugeführten Kraftstoff widerspiegelt und wenn das Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffeinspritzventil ausgegeben wird, nicht den zugeführten Kraftstoff widerspiegelt.

3. Steuerung für einen Verbrennungsmotor nach Anspruch 1 oder 2, wobei
das Diagnosemittel dazu ausgebildet ist, zu diagnostizieren, dass sowohl der Katalysator als auch das Kraftstoffzugabeventil normal sind, wenn, zur Zeit der Diagnose, das Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffzugabeventil ausgegeben wird, den zugeführten Kraftstoff widerspiegelt.

4. Steuerung für einen Verbrennungsmotor nach einem beliebigen der Ansprüche 1 bis 3, wobei,
wenn, zur Zeit der Diagnose, das Ausmaß der Änderung des Luft-Kraftstoff-Verhältnisses des Abgases als Reaktion auf einen Kraftstoffzufuhrbefehl zum Zuführen von Kraftstoff, der durch das Diagnosemittel zu dem Kraftstoffzugabeventil ausgegeben wird, nicht den zugeführten Kraftstoff widerspiegelt, das Diagnosemittel dazu ausgebildet ist, basierend auf dem Ausmaß des Anstiegs der Temperatur des Katalysators als Reaktion auf einen Kraftstoffzufuhrbefehl zum Zuführen von Kraftstoff, der durch das Diagnosemittel zu dem Kraftstoffeinspritzventil ausgegeben wird, zu diagnostizieren, ob der Katalysator und/oder das Kraftstoffzugabeventil abnormal sind, während das Ausgeben eines Kraftstoffzufuhrbefehls zum Zuführen von Kraftstoff zu dem Kraftstoffzugabeventil gestoppt wird.

5. Steuerung für einen Verbrennungsmotor nach einem beliebigen der Ansprüche 1 bis 4, wobei
das Diagnosemittel dazu ausgebildet ist, wenn das Ausmaß der Änderung des Luft-Kraftstoff-Verhältnisses des Abgases als Reaktion auf den Kraftstoffzufuhrbefehl, der zu dem Kraftstoffzugabeventil ausgegeben wird, den zugeführten Kraftstoff widerspiegelt, das Ausgeben des Kraftstoffzufuhrbefehls zu dem Kraftstoffeinspritzventil zu sperren, um zu diagnostizieren, ob der Katalysator und/oder das Kraftstoffzugabeventil abnormal sind.

6. Steuerung für einen Verbrennungsmotor nach einem beliebigen der Ansprüche 1 bis 5, wobei
mehrere Kraftstoffzugabeventile (16, 26; 116A, 116B) stromaufwärts des Luft-Kraftstoff-Verhältnis-Detektiermittels (71, 171) vorgesehen sind, das Diagnosemittel (40, 140) dazu ausgebildet ist, die Diagnose hinsichtlich der Kraftstoffzugabeventile einzeln durchzuführen, und, wenn das Diagnosemittel eine Diagnose hinsichtlich eines vorbestimmten der Kraftstoffzugabeventile durchführt, das Diagnosemittel dazu ausgebildet ist, das Zuführen von Kraftstoff durch das(die) andere(n) Kraftstoffzugabeventil(e) als dem vorbestimmten der Kraftstoffzugabeventile zu sperren.

7. Steuerung für einen Verbrennungsmotor nach einem beliebigen der Ansprüche 1 bis 6, wobei
der Verbrennungsmotor (10) mehrere Zylinderbänke umfasst, der Auslasskanal (15, 25) für jede der Zylinderbänke (11, 21) vorgesehen ist, die Auslasskanäle an einem Sammelabschnitt stromab der Auslasskanäle zusammengeführt werden, sowohl der Katalysator (17, 27) als auch das Kraftstoffzugabeventil (16, 26) für jede der Zylinderbänke vorgesehen sind und das Luft-Kraftstoff-Verhältnis-Detektiermittel (71) stromab des Sammelabschnitts vorgesehen ist.

8. Steuerung für einen Verbrennungsmotor nach einem beliebigen der Ansprüche 1 bis 7, wobei
ein Filter (31) in den Auslasskanälen (15, 25) stromab eines Sammelabschnitts vorgesehen ist und in Abgas enthaltene Partikel abscheidet.

9. Steuerung für einen Verbrennungsmotor nach einem beliebigen der Ansprüche 1 bis 8, wobei
das Diagnosemittel (40) dazu ausgebildet ist, die Diagnose nur unmittelbar nach dem Start des Verbrennungsmotors durchzuführen.

10. Steuerung für einen Verbrennungsmotor nach Anspruch 8, ferner umfassend:
ein Abgastemperaturdetektiermittel, das dazu ausgebildet ist, die Temperatur von Abgas, das in den Filter strömt, zu detektieren, wobei
das Diagnosemittel dazu ausgebildet ist, die Diagnose nur dann durchzuführen, wenn die Temperatur von Abgas, die durch das Abgastemperaturdetektiermittel detektiert wird, größer gleich einer vorbestimmten Temperatur ist.

11. Steuerung für einen Verbrennungsmotor nach einem beliebigen der Ansprüche 1 bis 10, wobei
das Temperaturanstiegsdetektiermittel einen stromabwärtigen Abgastemperatursensor aufweist, der die Temperatur von Abgas detektiert, das aus dem Katalysator strömt, und dazu ausgebildet ist, das Ausmaß des Anstiegs der Temperatur des Katalysators auf der Basis der Temperatur von Abgas, die durch den stromabwärtigen Abgastemperatursensor detektiert wird, zu detektieren.

## Revendications

1. Contrôleur pour moteur à combustion interne qui comprend un catalyseur (17, 27 ; 117 ; 217 ; 317A, 317B ; 417 ; 517) qui est prévu dans un passage d'échappement (15, 25 ; 115 ; 215 ; 315 ; 415 ; 515), une soupape d'addition de carburant (16, 26 ; 116A, 116B ; 216 ; 316 ; 416 ; 516) qui est prévue en amont du catalyseur dans le passage d'échappement et configurée pour délivrer du carburant au catalyseur, une soupape d'injection de carburant (14, 24 ; 114 ; 214 ; 314 ; 414) configurée pour injecter du carburant dans un cylindre, des moyens de détection d'augmentation de température (51, 52 ; 61, 62 ; 153 ; 253 ; 353A, 353B ; 453 ; 553) configurés pour détecter une augmentation de température du catalyseur, et des moyens de détection de rapport air-carburant (71, 171, 271, 371, 471, 571) qui sont prévus en aval du catalyseur dans le passage d'échappement et qui sont configurés pour détecter le rapport air-carburant du gaz d'échappement,
le contrôleur étant configuré de telle sorte que :
la soupape d'injection de carburant (14, 24 ; 114 ; 214 ; 314 ; 414) injecte du carburant dans un cylindre à un temps de calage pour lequel le carburant ne contribue pas à la combustion du moteur à combustion interne pour délivrer ainsi du carburant non brûlé au catalyseur ;
les moyens de détection d'augmentation de température (51, 52 ; 61, 62 ; 153 ; 253 ; 353A, 353B ; 453 ; 553) détectent une augmentation de température du catalyseur en réponse au carburant délivré par la soupape d'addition de carburant ou la soupape d'injection de carburant ; et
le contrôleur comportant des moyens de diagnostic (40, 140, 240, 340, 440, 540) qui sont configurés pour diagnostiquer si le catalyseur et/ou la soupape d'addition de carburant sont anormaux sur la base du fait que le degré d'augmentation de la température du catalyseur en réponse à une commande d'alimentation en carburant pour délivrer du carburant, qui est délivrée à la soupape d'addition de carburant par les moyens de diagnostic, reflète le carburant délivré et que le degré d'augmentation de température du catalyseur en réponse à une commande d'alimentation en carburant pour délivrer du carburant, qui est délivrée à la soupape d'injection de carburant par les moyens de diagnostic, reflète le carburant délivré au moment du diagnostic, dans lequel
les moyens de diagnostic sont configurés pour diagnostiquer que le catalyseur est normal et la soupape d'addition de carburant est anormale quand le degré d'augmentation de température du catalyseur en réponse à une commande d'alimentation en carburant pour délivrer du carburant, qui est délivrée à la soupape d'addition de carburant par les moyens de diagnostic, ne reflète pas le carburant délivré et quand le degré d'augmentation de température du catalyseur en réponse à une commande d'alimentation en carburant pour délivrer du carburant, qui est délivrée à la soupape d'injection de carburant par les moyens de diagnostic, reflète le carburant délivré au moment du diagnostic ;
le contrôleur pour moteur à combustion interne étant **caractérisé en ce que** les moyens de diagnostic sont en outre configurés pour diagnostiquer que le catalyseur est anormal et la soupape d'addition de carburant est normale quand le degré d'augmentation de température du catalyseur en réponse à une commande d'alimentation en carburant pour délivrer du carburant, qui est délivrée à la soupape d'addition de carburant par les moyens de diagnostic, ne reflète pas le carburant délivré et quand le degré de changement du rapport air-carburant du gaz d'échappement en réponse à la commande d'alimentation en carburant de sortie reflète le carburant délivré au moment du diagnostic.

2. Contrôleur pour moteur à combustion interne selon la revendication 1, dans lequel
les moyens de diagnostic sont configurés pour diagnostiquer que le catalyseur et la soupape d'addition de carburant sont tous les deux anormaux quand le degré de changement du rapport air-carburant du gaz d'échappement en réponse à une commande d'alimentation en carburant pour délivrer du carburant, qui est délivrée à la soupape d'addition de carburant par les moyens de diagnostic, ne reflète pas le carburant délivré et quand le degré d'augmentation de la température du catalyseur en réponse à une commande d'alimentation en carburant pour délivrer du carburant, qui est délivrée à la soupape d'injection de carburant par les moyens de diagnostic, ne reflète pas le carburant délivré au moment du diagnostic.

3. Contrôleur pour moteur à combustion interne selon la revendication 1 ou 2, dans lequel
les moyens de diagnostic sont configurés pour diagnostiquer que le catalyseur et la soupape d'addition de carburant sont tous les deux normaux quand le degré d'augmentation de température du catalyseur en réponse à une commande d'alimentation en carburant pour délivrer du carburant, qui est délivrée à la soupape d'addition de carburant par les moyens de diagnostic, reflète le carburant délivré au moment du diagnostic.

4. Contrôleur pour moteur à combustion interne selon l'une quelconque des revendications 1 à 3, dans lequel
quand le degré de changement du rapport air-carburant du gaz d'échappement en réponse à une commande d'alimentation en carburant pour délivrer du carburant, qui est délivrée à la soupape d'addition de carburant par les moyens de diagnostic, ne reflète pas le carburant délivré au moment du diagnostic, les moyens de diagnostic sont configurés pour diagnostiquer si le catalyseur et/ou la soupape d'addition de carburant sont anormaux sur la base du degré d'augmentation de température du catalyseur en réponse à une commande d'alimentation en carburant pour délivrer du carburant, qui est délivrée à la soupape d'injection de carburant par les moyens de diagnostic, tout en arrêtant de délivrer une commande d'alimentation en carburant pour délivrer du carburant à la soupape d'addition de carburant.

5. Contrôleur pour moteur à combustion interne selon l'une quelconque des revendications 1 à 4, dans lequel
les moyens de diagnostic sont configurés pour, quand le degré de changement du rapport air-carburant du gaz d'échappement en réponse à la commande d'alimentation en carburant délivrée à la soupape d'addition de carburant reflète le carburant délivré, interdit de délivrer la commande d'alimentation en carburant à la soupape d'injection de carburant afin de diagnostiquer si le catalyseur et/ou la soupape d'addition de carburant sont anormaux.

6. Contrôleur pour moteur à combustion interne selon l'une quelconque des revendications 1 à 5, dans lequel
une pluralité de soupapes d'addition de carburant (16, 26 ; 116A, 116B) est prévue en amont des moyens de détection de rapport air-carburant (71, 171), les moyens de diagnostic (40, 140) sont configurés pour réaliser le diagnostic sur les soupapes d'addition de carburant une par une, et, quand les moyens de diagnostic réalisent un diagnostic sur l'une prédéterminée des soupapes d'addition de carburant, les moyens de diagnostic sont configurés pour interdire de délivrer du carburant par la ou les soupapes d'addition de carburant autres que celle prédéterminée des soupapes d'addition de carburant.

7. Contrôleur pour moteur à combustion interne selon l'une quelconque des revendications 1 à 6, dans lequel
le moteur à combustion interne (10) comprend une pluralité de rangées de cylindres, le passage d'échappement (15, 25) est prévu pour chacune des rangées de cylindres (11, 21), les passages d'échappement sont rassemblés au niveau d'une partie de collecteur en aval des passages d'échappement, le catalyseur (17, 27) et la soupape d'addition de carburant (16, 26) sont toutes les deux prévues pour chacune des rangées de cylindres, et les moyens de détection de rapport air-carburant (71) sont prévus en aval de la partie de collecteur.

8. Contrôleur pour moteur à combustion interne selon l'une quelconque des revendications 1 à 7, dans lequel
un filtre (31) est prévu dans les passages d'échappement (15, 25) en aval d'une partie de collecteur, et piège les particules contenue dans du gaz d'échappement.

9. Contrôleur pour moteur à combustion interne selon l'une quelconque des revendications 1 à 8, dans lequel
les moyens de diagnostic (40) sont configurés pour réaliser le diagnostic seulement juste après la mise en route du moteur à combustion interne.

10. Contrôleur pour moteur à combustion interne selon la revendication 8, comportant en outre :
des moyens de détection de température de gaz d'échappement qui sont configurés pour détecter la température du gaz d'échappement s'écoulant dans le filtre, dans lequel
les moyens de diagnostic sont configurés pour réaliser le diagnostic seulement quand la température du gaz d'échappement détectée par les moyens de détection de température de gaz d'échappement est supérieure ou égale à une température prédéterminée.

11. Contrôleur pour moteur à combustion interne selon l'une quelconque des revendications 1 à 10, dans lequel
les moyens de détection d'augmentation de température ont un capteur de température de gaz d'échappement en aval qui détecte la température de gaz d'échappement s'écoulant depuis le catalyseur, et est configuré pour détecter le degré d'augmentation de température du catalyseur sur la base de la température du gaz d'échappement, détectée par le capteur de température de gaz d'échappement en aval.
